(19) Europäisches Patentamt / European Patent Office / Office européen des brevets

(11) **EP 3 901 579 B1**

(12) **EUROPEAN PATENT SPECIFICATION**

(45) Date of publication and mention
of the grant of the patent:
**10.05.2023 Bulletin 2023/19**

(21) Application number: **18943921.9**

(22) Date of filing: **20.12.2018**

(51) International Patent Classification (IPC):
*G01C 21/20* (2006.01)   *G08G 3/00* (2006.01)
*B63H 25/04* (2006.01)

(52) Cooperative Patent Classification (CPC):
**G01C 21/203; B63H 25/04; G08G 3/00; Y02T 70/00**

(86) International application number:
**PCT/JP2018/047101**

(87) International publication number:
**WO 2020/129226 (25.06.2020 Gazette 2020/26)**

(54) **NAVIGATION ASSISTANCE METHOD, NAVIGATION ASSISTANCE DEVICE, AND NAVIGATION ASSISTANCE PROGRAM**

NAVIGATIONSUNTERSTÜTZUNGSVERFAHREN,
NAVIGATIONSUNTERSTÜTZUNGSVORRICHTUNG UND
NAVIGATIONSUNTERSTÜTZUNGSPROGRAMM

PROCÉDÉ D'AIDE À LA NAVIGATION, DISPOSITIF D'AIDE À LA NAVIGATION ET PROGRAMME
D'AIDE À LA NAVIGATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.10.2021 Bulletin 2021/43**

(73) Proprietor: **Fujitsu Limited
Kawasaki-shi, Kanagawa 211-8588 (JP)**

(72) Inventors:
• **IKEDA, Takuro
Kawasaki-shi, Kanagawa 211-8588 (JP)**

• **ANAN, Taizo
Kawasaki-shi, Kanagawa 211-8588 (JP)**

(74) Representative: **Hoffmann Eitle
Patent- und Rechtsanwälte PartmbB
Arabellastraße 30
81925 München (DE)**

(56) References cited:
EP-A1- 2 498 056      WO-A1-2011/055512
JP-A- S62 274 500     JP-A- 2001 291 200
JP-A- 2009 286 230    JP-A- 2011 512 512
JP-A- 2013 104 690    JP-A- 2015 520 698
JP-A- 2015 523 557    US-A1- 2018 273 144

**Description**

TECHNICAL FIELD

The present invention relates to a navigation support method, device and program.

BACKGROUND ART

In the navigation support technology, a navigation support system is known in which the performance of a vessel is estimated based on vessel voyage data and past meteorological and hydrographic data, and an optimal route for this vessel is computed based on the estimated performance of the vessel and meteorological and hydrographic data (see, for example, Patent Documents 1 and 2). In such a navigation support system, for example, when a user specifies the engine speed, the system estimates the performance of the vessel (the vessel navigation speed and the fuel consumption amount) under predicted meteorological and hydrographic conditions, and searches for an optimal route that enables the arrival with less fuel consumption amount.

US 2018/273144 A1 discloses a system configured to monitor energy usage of a surface maritime vessel. The system comprises a device configured to receive characteristic data representing at least one operating characteristic of the vessel, and a device configured to receive model data representing at least one energy usage model for the vessel. The system further includes a device configured to process the characteristic data and the model data to generate an output representing a comparison between the characteristic data and the model data.

EP 2 498 056 A1 discloses method to optimize a short-term planned route from a start position that is a ship position at a first time up to an end position that is the ship position at a second time which is designed based on a planned route, an estimated encounter marine phenomenon information, operation performance information measured on a ship, and a hull motion model of the ship, the planned route being based on meteorological and marine phenomena prediction information and performance information of the ship, the estimated encounter marine phenomenon information being measured on the ship based on actually encountered marine phenomenon information.

CITATION LIST

PATENT DOCUMENT

    Patent Document 1: Japanese Patent No. 5281022
    Patent Document 2: Japanese Laid-open Patent Publication No. 2013-134089
    Patent Document 3: US 2018/273144 A1
    Patent Document 4: EP 2 498 056 A1

SUMMARY OF INVENTION

TECHNICAL PROBLEM

Incidentally, in the actual navigation, the captain of a vessel selects a route with low wind and wave resistance at a normal output prescribed at the time of designing the vessel. The normal output mentioned here is an output that is normally used to obtain navigation velocity, and refers to an economical output from the viewpoint of engine efficiency and maintenance. In many cases, a route selected at the normal output is a route that suits the captain's sense, and is deemed as a route that requires less fuel expense and takes less time.

However, a conventional navigation support system has a disadvantage that it is not possible to present an accurate optimal route at the normal output. For example, the conventional navigation support system searches for an optimal route by presuming a constant engine speed. As a result, the conventional navigation support system can calculate the arrival time when passing through the optimal route found by the search. However, in the actual navigation, it is difficult to keep the engine speed constant due to the influence of waves, wind, and ocean currents. It is known that keeping the engine speed constant will impose a load on the engine and lead to failure. Therefore, it can be said that the optimal route and arrival time found by the search in the conventional navigation support system do not match the reality. Accordingly, the conventional navigation support system cannot present an accurate optimal route at the normal output.

Note that the above-mentioned problem is a problem that arises not only in the normal output but also in other vessel maneuvering patterns similarly, such as a medium output that does not impose a load on the engine and a small output for reducing the fuel expense.

In one mode, an object of the present invention is to present an accurate optimal route according to a vessel maneuvering pattern.

SOLUTION TO PROBLEM

In one aspect of the invention, a navigation support method is provided, as defined in claim 1. In further aspects of the invention a navigation support device and a navigation support program are provided, as defined in claims 4 and 5.

ADVANTAGEOUS EFFECTS OF INVENTION

According to one aspect of embodiment, an accurate optimal route according to a vessel maneuvering pattern can be presented.

BRIEF DESCRIPTION OF DRAWINGS

FIG. 1 is a functional block diagram illustrating a configuration of a navigation support device according to an embodiment.
FIG. 2 is a diagram illustrating an outline of navigation support according to the embodiment.
FIG. 3 is a diagram illustrating an example of voyage data according to the embodiment.
FIG. 4 is a diagram illustrating an example of meteorological/hydrographic data according to the embodiment.
FIG. 5 is a diagram illustrating an example of voyage data classification processing according to the embodiment.
FIG. 6 is a diagram illustrating an example of voyage data aggregation processing according to the embodiment.
FIG. 7 is a diagram illustrating an example of correction processing for voyage data for each pattern according to the embodiment.
FIG. 8 is a diagram illustrating an example of performance estimation model generation processing according to the embodiment.
FIG. 9 is a diagram illustrating an idea of the performance estimation model generation processing according to the embodiment.
FIG. 10 is a diagram illustrating an example of performance estimation processing and optimal route search processing according to the embodiment.
FIG. 11 is a diagram illustrating an example of an optimal route search result according to the embodiment.
FIG. 12 is a diagram illustrating an operation example for an optimal route search when a section is specified.
FIG. 13 is a diagram illustrating an example of a simulation of an optimal route search when a section is specified.
FIG. 14 is a diagram illustrating an example of a flowchart of a model learning phase according to the embodiment.
FIG. 15 is a diagram illustrating an example of a flowchart of a service provision phase according to the embodiment.
FIG. 16 is a diagram illustrating an example of a flowchart of autopilot cooperation processing according to the embodiment.
FIG. 17 is a diagram illustrating a usage example of navigation support processing according to the embodiment.
FIG. 18 is a diagram illustrating an example of a computer that executes a navigation support program.

DESCRIPTION OF EMBODIMENTS

Hereinafter, embodiments of a navigation support method, a navigation support device, and a navigation support program disclosed in the present application will be described in detail with reference to the drawings. Note that the present invention is not limited to the embodiments.

[Embodiments]

[Configuration of Navigation Support Device]

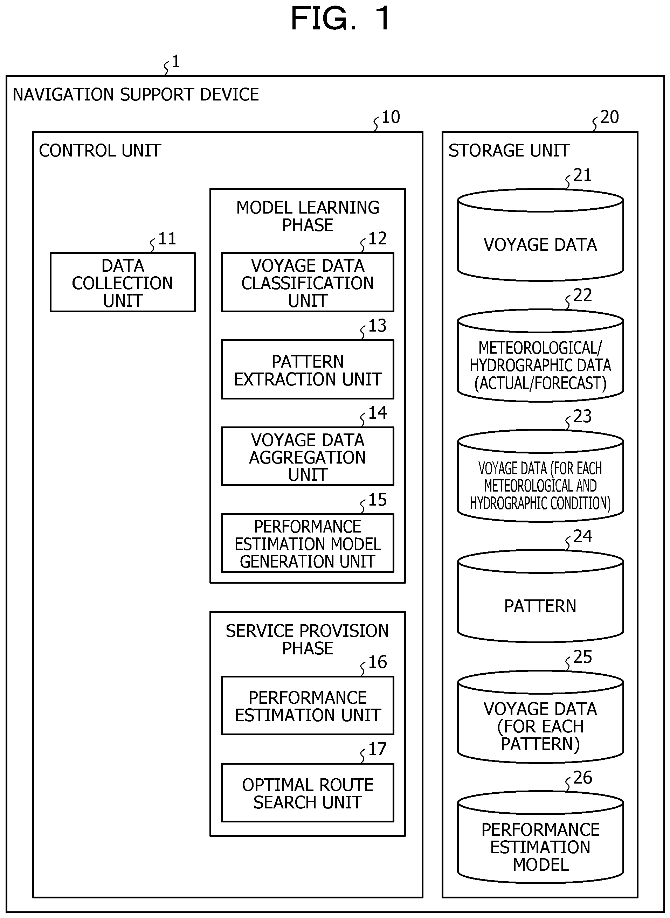

FIG. 1 is a functional block diagram illustrating a configuration of a navigation support device according to an embodiment. As illustrated in FIG. 1, the navigation support device 1 classifies vessel navigation data according to each meteorological and hydrographic condition, and calculates the distribution of vessel speed for each meteorological and hydrographic condition used for the classification. The navigation support device 1 aggregates the vessel voyage data for each vessel maneuvering pattern extracted from vessel maneuvering distribution calculated for each meteorological and hydrographic condition used for the classification. The navigation support device 1 learns the vessel performance using the aggregated vessel voyage data and past meteorological and hydrographic data for each vessel maneuvering pattern, and constructs an estimation model for the vessel performance for each vessel maneuvering pattern. Then, when accepting the vessel maneuvering pattern from the start to the goal of the vessel, the navigation support device 1 calculates the speed of the vessel in the entire section from the start to the goal, based on the estimation model corresponding to the accepted vessel maneuvering pattern among the estimation models for the vessel performance. The navigation support device 1 displays the arrival time on the route that is optimal, based on the calculated speed of the vessel.

The vessel performance mentioned here includes the navigation speed, fuel consumption amount, and the like of the vessel.

The vessel maneuvering pattern mentioned here refers to a pattern that the captain actually selects when maneuvering the vessel. As the vessel maneuvering pattern, for example, "pattern a" in which the vessel is maneuvered at a normal output, "pattern b" in which the vessel is maneuvered with the engine output slightly lowered, "pattern c" in which the vessel is maneuvered on a voyage in deceleration, and the like are assumed. Hereinafter, the vessel maneuvering pattern is sometimes simply referred to as "pattern".

"Pattern a" is a pattern in which a vessel is maneuvered by selecting a route with low wind and wave resistance at a normal output prescribed at the time of designing the vessel. "Normal output" refers to an economical output from the viewpoint of engine efficiency and maintenance. A route selected at the normal output is deemed as a route that requires less fuel expense and takes less time. The pattern a is referred to as a vessel maneuvering pattern at the normal output.

"Pattern b" is a pattern in which a vessel is maneuvered by lowering the output so as not to impose a load on the engine (not to cause a torque-rich phenomenon) under stormy weather. The pattern b is referred to as a vessel maneuvering pattern at a medium output. "Pattern c" is a pattern in which a vessel is decelerated and maneuvered in order to reduce fuel expense when there is no next navigation schedule and there is time to spare. The pattern c is referred to as a vessel maneuvering pattern at a small output. Note that the vessel maneuvering patterns are not limited to these patterns. As an example, the vessel maneuvering patterns may include a pattern d in which a vessel is maneuvered by increasing the output so as to impose a load on the engine when there is no time to spare. The pattern d is referred to as a vessel maneuvering pattern at a high output.

[Outline of Navigation Support]

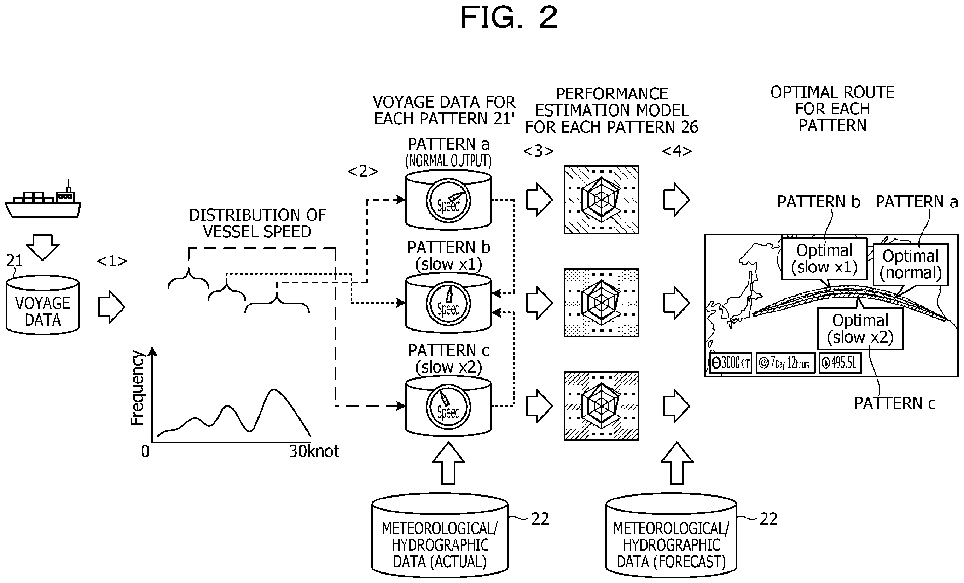

Here, an outline of navigation support according to the embodiment will be described with reference to FIG. 2. FIG. 2 is a diagram illustrating an outline of navigation support according to the embodiment.

As illustrated in FIG. 2, the navigation support device 1 calculates the distribution of vessel speed from voyage data 21 relating to the vessel, and extracts a vessel maneuvering pattern (pattern) from the distribution of vessel speed (<1>). The distribution of vessel speed indicates the frequency distribution of vessel speed. Here, the pattern is extracted based on the frequency of occurrence. A section with the highest frequency of occurrence is extracted as the pattern a at the normal output. This is because the captain often selects a route with low wind and wave resistance to navigate at the normal output prescribed at the time of designing the vessel. A section with the next highest frequency of occurrence is extracted as the pattern b at the medium output. A section with the slowest vessel speed is extracted as the pattern c at the small output. Note that the distribution may be derived from engine speed or horsepower instead of vessel speed.

Then, the navigation support device 1 obtains voyage data 21' by aggregation for each pattern (<2>).

Subsequently, the navigation support device 1 learns the vessel performance using the voyage data 21' aggregated for each pattern and actual meteorological/hydrographic data (actual/forecast) 22, and constructs an estimation model for the vessel performance for each pattern (<3>).

Thereafter, for example, when accepting the start point, start time, and goal point of the vessel from the vessel, the navigation support device 1 estimates the vessel performance from the start to the goal of the vessel for each pattern, on the basis of forecast meteorological/hydrographic data (actual/forecast) 22 and the estimation model for the vessel performance for each pattern. The vessel performance mentioned here indicates the navigation speed, fuel consumption amount, and the like of the vessel. Then, the navigation support device 1 calculates an optimal route for the vessel based on the estimated vessel performance for each pattern, and displays the arrival time on the optimal route, for example, to the vessel as a source of acceptance (<4>).

Returning to FIG. 1, the navigation support device 1 includes a control unit 10 and a storage unit 20.

The control unit 10 corresponds to an electronic circuit such as a central processing unit (CPU). Then, the control unit 10 includes an internal memory for storing programs defining various processing procedures and control data, and executes a variety of types of processing using the programs and the control data. The control unit 10 includes a data collection unit 11, a voyage data classification unit 12, a pattern extraction unit 13, a voyage data aggregation unit 14, and a performance estimation model generation unit 15. Furthermore, the control unit 10 includes a performance estimation unit 16 and an optimal route search unit 17. Note that the voyage data classification unit 12, the pattern extraction unit 13, the voyage data aggregation unit 14, and the performance estimation model generation unit 15 are functional units for a model learning phase. Furthermore, the performance estimation unit 16 and the optimal route search unit 17 are functional units for a service provision phase. In addition, the performance estimation unit 16 and the optimal route search unit 17 are an example of a calculation unit. The optimal route search unit 17 is an example of a display unit.

For example, the storage unit 20 is a semiconductor memory element such as a random access memory (RAM) or a flash memory, or a storage device such as a hard disk or an optical disc. The storage unit 20 has the voyage data 21, the meteorological/hydrographic data (actual/forecast) 22, voyage data (for each meteorological and hydrographic condition) 23, a pattern 24, voyage data (for each pattern) 25, and a performance estimation model 26. Note that the performance estimation model 26 is an example of a storage unit.

The voyage data 21 is data indicating, for example, when, where, at what speed, and in which direction the vessel was heading during voyage. In different terms, the voyage data 21 is data indicating the history of vessel maneuvering performed by the captain of the vessel. The voyage data 21 is collected using, for example, an automatic identification system (AIS), a voyage data recorder (VDR), and an engine logger.

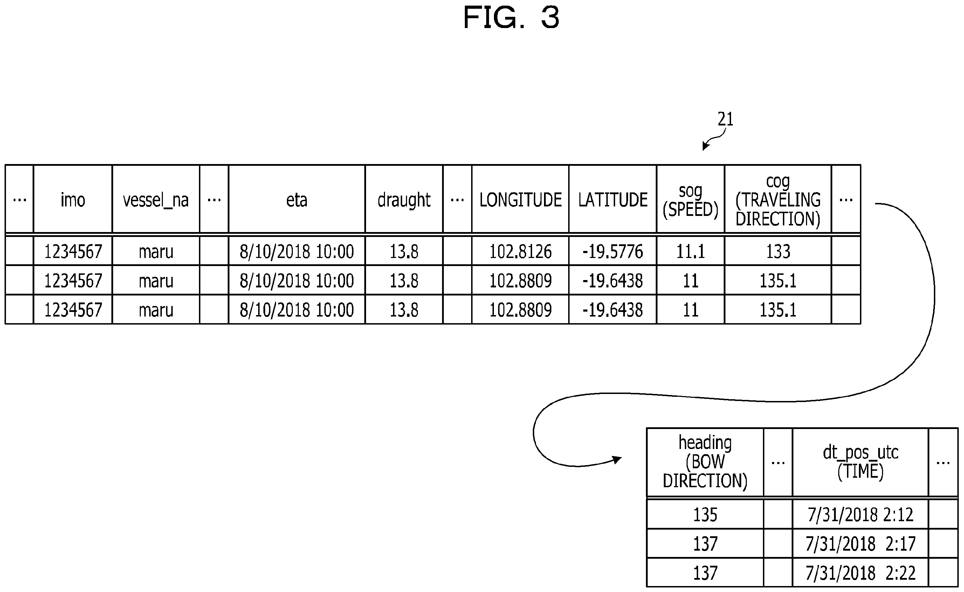

Here, an example of the voyage data 21 will be described with reference to FIG. 3. FIG. 3 is a diagram illustrating an example of the voyage data according to the embodiment. As illustrated in FIG. 3, the voyage data 21 stores the latitude, longitude, speed, traveling direction, ..., bow direction, time, ..., for each versel_name in association with each other. The item versel_name indicates the name of the vessel. Note that the voyage data 21 is not limited to this example, and the engine speed and consumed fuel may be further added.

Returning to FIG. 1, the meteorological/hydrographic data (actual/forecast) 22 includes meteorological data and hydrographic data including the actual results and forecasts for the vessel. The meteorological/hydrographic data (actual/forecast) 22 can be collected using, for example, data delivered from a weather forecast data provider.

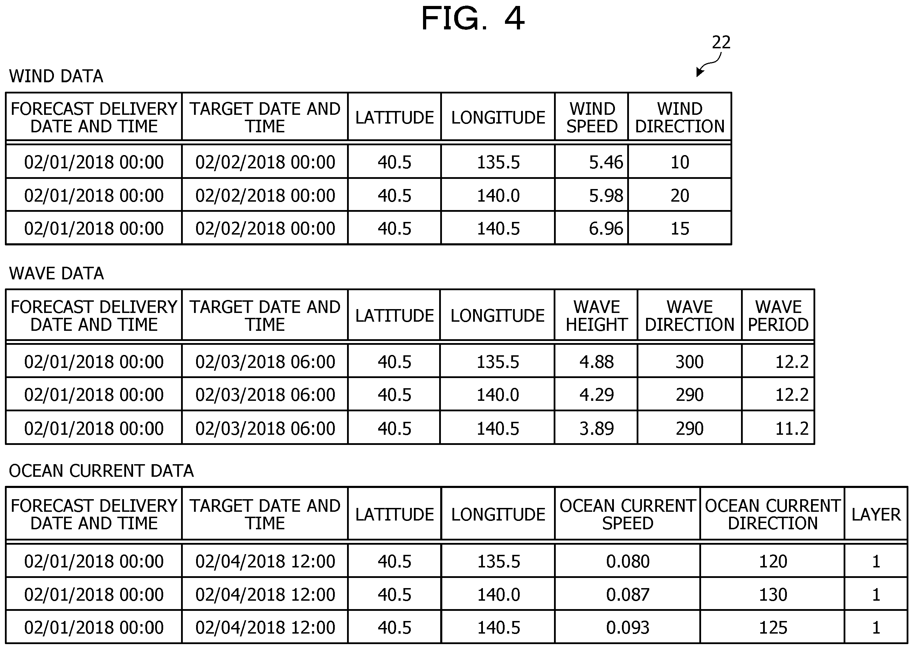

Here, an example of meteorological/hydrographic data (actual/forecast) 22 will be described with reference to FIG. 4. FIG. 4 is a diagram illustrating an example of meteorological/hydrographic data according to the embodiment. The upper figure in FIG. 4 represents forecast wind data in the meteorological data. The middle figure in FIG. 4 represents forecast wave data in the hydrographic data. The lower figure in FIG. 4 represents forecast ocean current data in the hydrographic data.

As illustrated in the upper figure in FIG. 4, the wind data stores the latitude, longitude, wind speed, and wind direction in association with the forecast delivery date and time and the target date and time. As illustrated in the middle figure in FIG. 4, the wave data stores the latitude, longitude, wave height, wave direction, and wave period in association with the forecast delivery date and time and the target date and time. As illustrated in the lower figure in FIG. 4, the ocean current data stores the latitude, longitude, ocean current speed, ocean current direction, and layer in association with the forecast delivery date and time and the target date and time.

Returning to FIG. 1, the voyage data (for each meteorological and hydrographic condition) 23 is voyage data obtained by classifying the voyage data 21 according to each meteorological and hydrographic condition. Note that the voyage data (for each meteorological and hydrographic condition) 23 is classified by the voyage data classification unit 12.

The pattern 24 is a vessel maneuvering pattern extracted from a plurality of vessel maneuvering patterns. Note that the pattern 24 is extracted by the pattern extraction unit 12.

The voyage data (for each pattern) 25 is voyage data obtained by aggregating the voyage data 21 for each pattern. Note that the voyage data (for each pattern) 25 is aggregated by the voyage data aggregation unit 14.

The performance estimation model 26 is an estimation model for the vessel performance for each pattern. Note that the performance estimation model 26 is generated by the performance estimation model generation unit 15.

The data collection unit 11 collects various types of data. For example, the data collection unit 11 collects the voyage data 21 using an AIS. The data collection unit 11 receives the meteorological data (actual/forecast) and the hydrographic data (actual/forecast) delivered from the weather forecast data provider, and collects the meteorological/hydrographic data (actual/forecast) 22.

The voyage data classification unit 12 classifies the voyage data 21 according to each meteorological and hydrographic condition.

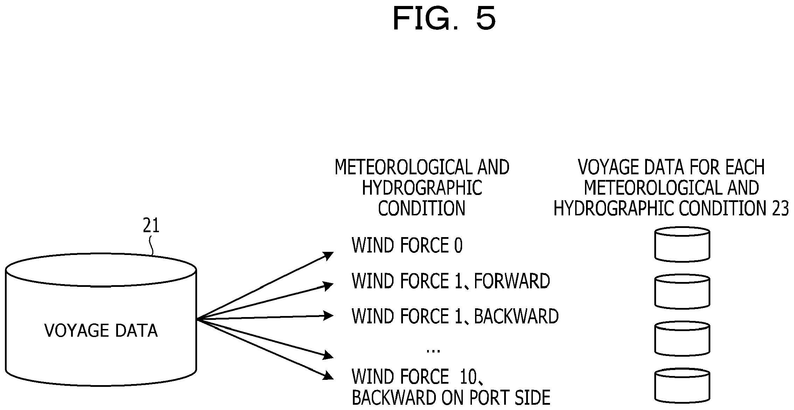

Here, an example of voyage data classification will be described with reference to FIG. 5. FIG. 5 is a diagram illustrating an example of voyage data classification processing according to the embodiment. As illustrated in FIG. 5, the voyage data classification unit 12 classifies the voyage data 21 according to each meteorological and hydrographic condition assigned in advance, and generates the voyage data 23 for each meteorological and hydrographic condition. The case indicated here is a case where the wind speed and the wind direction are applied as meteorological and hydrographic conditions. As an example of meteorological and hydrographic conditions, a case where the wind force is "0", a case where the wind force is "1" and forward, a case where the wind force is "1" and backward,..., and a case where the wind force is "10" and backward on the port side are illustrated. The voyage data 21 is classified according to each of such meteorological and hydrographic conditions into the voyage data 23 for each meteorological and hydrographic condition.

The pattern extraction unit 13 clusters vessel speed data of the voyage data 23 for each meteorological and hydrographic condition, and extracts the vessel maneuvering pattern (pattern). For example, the pattern extraction unit 13 clusters the vessel speed data using data including at least the position (latitude and longitude), time, and vessel speed during voyage in the voyage data 23 for each meteorological and hydrographic condition. For clustering, the k-means method or the like can be used as an example. Then, as a result of clustering, the pattern extraction unit 13 extracts, as an example, a vessel maneuvering pattern (pattern a) at the normal output, a vessel maneuvering pattern (pattern b) at the medium output, a vessel maneuvering pattern (pattern c) at the small output, and the like. Subsequently, the pattern extraction unit 13 saves the extracted patterns in the pattern 24. Note that the pattern extraction unit 13 has been described to cluster the vessel speed data of the voyage data 23 for each meteorological and hydrographic condition to extract patterns, but is not limited to this example. The engine speed or horsepower may be used instead of the vessel speed data to perform clustering and extract patterns.

Returning to FIG. 1, the voyage data aggregation unit 14 calculates the distribution of vessel speed using the voyage data 23 for each meteorological and hydrographic condition. The distribution of vessel speed mentioned here refers to, for example, the distribution of frequency of occurrence of vessel speed. For example, the voyage data aggregation unit 14 calculates the distribution of frequency of occurrence of vessel speed with respect to the voyage data 23 for each meteorological and hydrographic condition.

Furthermore, the voyage data aggregation unit 14 divides the distribution into sections based on the frequency of occurrence in the distribution of vessel speed calculated for each meteorological and hydrographic condition. The divided sections are associated with the vessel maneuvering patterns. This allows the voyage data aggregation unit 14 to regard a section of vessel speed with the highest frequency of occurrence as the vessel maneuvering pattern at the normal output, by calculating the frequency of occurrence of vessel speed under the same meteorological and hydrographic condition. In other words, this is because it is assumed that the captain often selects the normal output, which is an economical output, when maneuvering a vessel. Similarly, the voyage data aggregation unit 14 can regard a section of the distribution obtained from the frequency of occurrence and the vessel speed, as a predetermined vessel maneuvering pattern, by calculating the frequency of occurrence of vessel speed under the same meteorological and hydrographic condition.

Furthermore, the voyage data aggregation unit 14 aggregates the voyage data 23 for each meteorological and hydrographic condition for each vessel maneuvering pattern, and generates the voyage data 25 for each vessel maneuvering pattern.

Note that the voyage data aggregation unit 14 may correct the voyage data 25 for each vessel maneuvering pattern when obtaining the voyage data 25 for each vessel maneuvering pattern by aggregation. For example, the voyage data aggregation unit 14 designates the vessel maneuvering pattern based on the frequency of occurrence of vessel speed for the same meteorological and hydrographic condition. However, if the voyage data aggregation unit 14 designates the vessel maneuvering pattern only according to the vessel speed, aggregation will result in the vessel maneuvering pattern to be switched in a very short period of time, but in reality, the vessel maneuvering pattern is not switched in a very short period of time. Accordingly, when the duration period of a vessel maneuvering pattern is within a predetermined period of time, it is desirable for the voyage data aggregation unit 14 to correct the voyage data of the vessel maneuvering pattern by employing a most frequent vessel maneuvering pattern contained in a predetermined period of time as a vessel maneuvering pattern for that period of time.

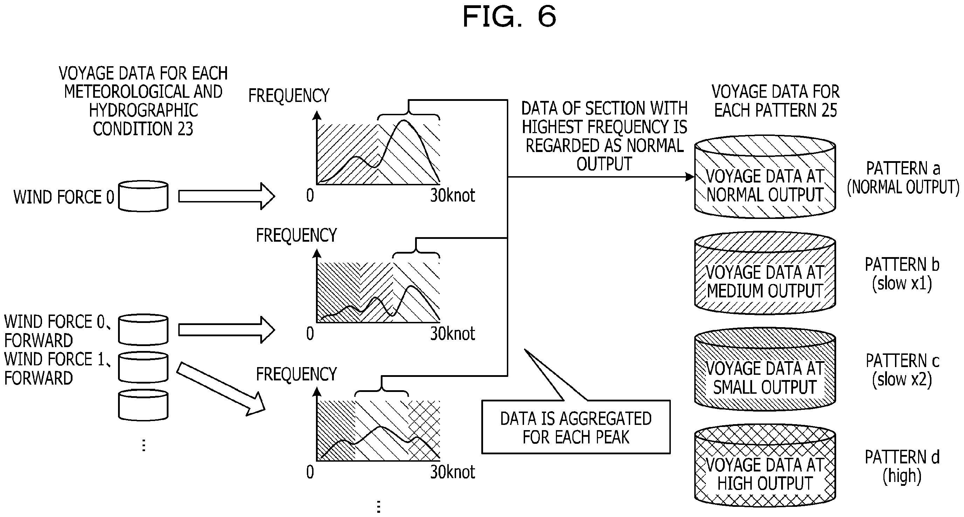

Here, an example of voyage data aggregation will be described with reference to FIG. 6. FIG. 6 is a diagram illustrating an example of voyage data aggregation processing according to the embodiment. FIG. 6 describes a case where the voyage data aggregation unit 14 aggregates the voyage data 23 for each meteorological and hydrographic condition with respect to the vessel maneuvering pattern at the normal output, and generates the voyage data 25 of the vessel maneuvering pattern at the normal output.

The voyage data aggregation unit 14 calculates a frequency distribution table of each vessel speed, using the voyage data 23 for each meteorological and hydrographic condition.

Then, the voyage data aggregation unit 14 divides the distribution into sections based on the frequency of occurrence in the calculated frequency distribution table of vessel speed. Here, a section of vessel speed with the highest frequency of occurrence is regarded as the vessel maneuvering pattern at the normal output. This is because it is assumed that the captain often selects the normal output, which is an economical output, when maneuvering a vessel.

Then, the voyage data aggregation unit 14 aggregates the voyage data 23 for each meteorological and hydrographic condition, and generates the voyage data 25 of the vessel maneuvering pattern at the normal output. Here, a section of vessel speed with the highest frequency of occurrence is regarded as the vessel maneuvering pattern at the normal output. Accordingly, the voyage data aggregation unit 14 aggregates the voyage data of the section of vessel speed with the highest frequency of occurrence from the respective frequency distribution tables calculated for each meteorological and hydrographic condition, and generates the voyage data 25 of the vessel maneuvering pattern at the normal output.

Note that a section of vessel speed with the next highest frequency of occurrence may be employed as the vessel maneuvering pattern at the medium output. In such a case, the voyage data aggregation unit 14 aggregates the voyage data of the section of the distribution of vessel speed with the next highest frequency of occurrence from the respective frequency distribution tables calculated for each meteorological and hydrographic condition, and generates the voyage data 25 of the vessel maneuvering pattern at the medium output. Furthermore, a section of the distribution with the slowest vessel speed may be employed as the vessel maneuvering pattern at the small output. In such a case, the voyage data aggregation unit 14 aggregates the voyage data of the section of the distribution with the slowest vessel speed from the respective frequency distribution tables calculated for each meteorological and hydrographic condition, and generates the voyage data 25 of the vessel maneuvering pattern at the small output. Furthermore, a section of the distribution with the fastest vessel speed may be employed as the vessel maneuvering pattern at the high output. In such a case, the voyage data aggregation unit 14 aggregates the voyage data of the section of the distribution with the fastest vessel speed from the respective frequency distribution tables calculated for each meteorological and hydrographic condition, and generates the voyage data 25 of the vessel maneuvering pattern at the high output.

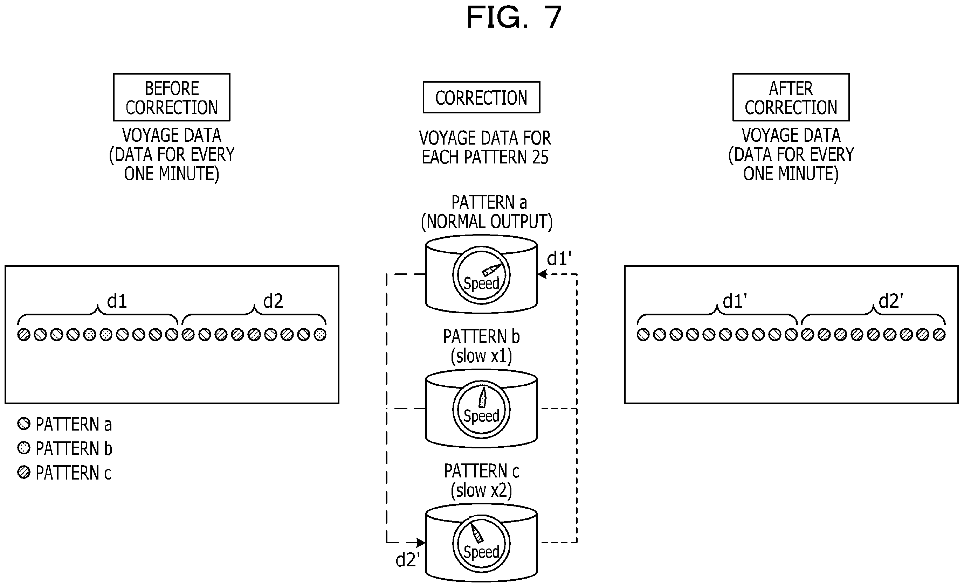

FIG. 7 is a diagram illustrating an example of correction processing for the voyage data for each pattern according to the embodiment. In FIG. 7, it is supposed that the voyage data aggregation unit 14 has obtained the voyage data 25 for each vessel maneuvering pattern by aggregation, such as the pattern a (normal output), the pattern b, and the pattern c.

As illustrated in FIG. 7, the voyage data for every one minute before correction is represented. Each piece of the voyage data switches the vessel maneuvering pattern based on the frequency of occurrence of vessel speed. However, if the voyage data aggregation unit 14 designates the vessel maneuvering pattern only according to the vessel speed, the vessel maneuvering pattern will be switched in a very short period of time, but in reality, the vessel maneuvering pattern is not switched in a very short period of time. Accordingly, when the duration time of a vessel maneuvering pattern is within a predetermined period of time, the voyage data aggregation unit 14 corrects the voyage data of the vessel maneuvering pattern by employing a most frequent vessel maneuvering pattern contained in a predetermined period of time as a vessel maneuvering pattern for that period of time. Here, since the pattern a is the most frequent among respective pieces of voyage data denoted by the reference sign d1, the respective pieces of voyage data are corrected as the voyage data of the most frequent pattern a, as indicated by the reference sign d1'. For example, the voyage data aggregation unit 14 corrects the voyage data of the pattern c and the voyage data of the pattern b to the voyage data of the pattern a. Furthermore, since the pattern c is the most frequent among respective pieces of voyage data denoted by the reference sign d2, the respective pieces of voyage data are corrected as the voyage data of the most frequent pattern c, as indicated by the reference sign d2'. For example, the voyage data aggregation unit 14 corrects the voyage data of the pattern a and the voyage data of the pattern b to the voyage data of the pattern c. This allows the voyage data aggregation unit 14 to aggregate the voyage data for each vessel maneuvering pattern in a realistic manner.

Returning to FIG. 1, the performance estimation model generation unit 15 learns the vessel performance using the aggregated voyage data 25 and the actual meteorological/hydrographic data 22 for each vessel maneuvering pattern, and generates an estimation model for the vessel performance. For example, the performance estimation model generation unit 15 generates the performance estimation model 26 for each vessel maneuvering pattern, using the actual meteorological/hydrographic data 22 as an explanatory variable and the vessel performance according to the voyage data 25 aggregated for each vessel maneuvering pattern as an objective variable. As an example, the performance estimation model generation unit 15 generates the performance estimation model 26 for each vessel maneuvering pattern by the least squares method with the multiple regression equation in following equation (1). Note that y in equation (1) is an objective variable, and indicates, for example, the vessel speed. Each of $x_1$ to $x_6$ in equation (1) is an explanatory variable, and indicates, for example, the wind speed, wind direction, wave height, wave direction, ocean current speed, and ocean current direction.

$$y = \beta_0 + \beta_1 x_1 + \beta_2 x_2 + \beta_3 x_3 + \beta_4 x_4 + \beta_5 x_5 + \beta_6 x_6 \ldots \text{Equation (1)}$$

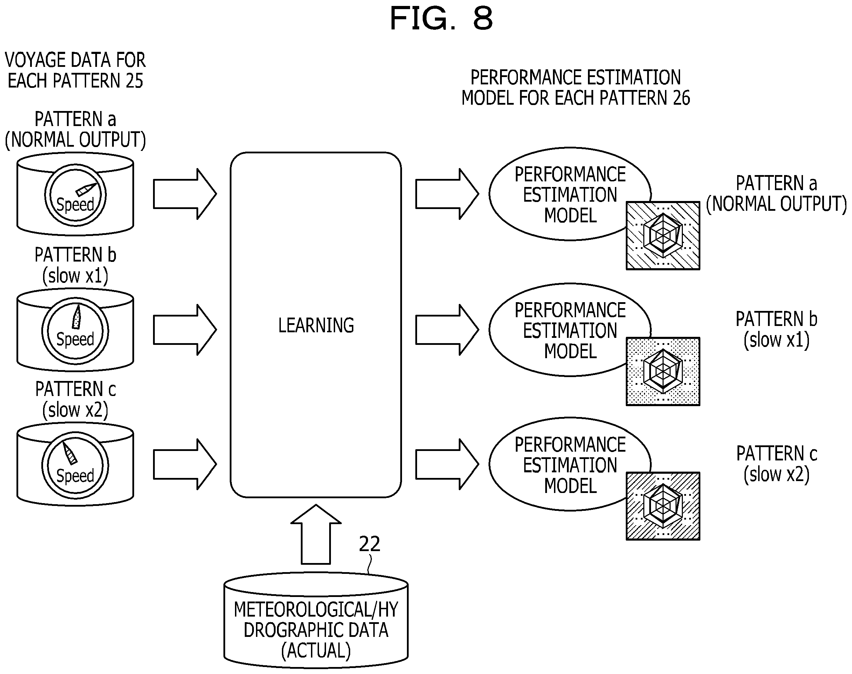

Here, an example of performance estimation model generation according to the embodiment will be described with reference to FIG. 8. FIG. 8 is a diagram illustrating an example of performance estimation model generation processing according to the embodiment. As illustrated in FIG. 8, the performance estimation model generation unit 15 learns the vessel performance using the aggregated voyage data 25 and the actual meteorological/hydrographic data 22 for each vessel maneuvering pattern, and generates an estimation model for the vessel performance. Here, the voyage data 25 for each of the pattern a, pattern b, and pattern c vessel maneuvering patterns has been aggregated. The performance estimation model generation unit 15 learns the vessel performance using, for example, "wind speed" in the actual meteorological/hydrographic data 22 as an explanatory variable and, for example, "vessel speed" in the voyage data 25 of the pattern a as an objective variable, and generates the performance estimation model 26 for the pattern a. The performance estimation model generation unit 15 learns the vessel performance using, for example, "wind speed" in the actual meteorological/hydrographic data 22 as an explanatory variable and, for example, "vessel speed" in the voyage data 25 of the pattern b as an objective variable, and generates the performance estimation model 26 for the pattern b. The performance estimation model generation unit 15 learns the vessel performance using, for example, "wind speed" in the actual meteorological/hydrographic data 22 as an explanatory variable and, for example, "vessel speed" in the voyage data 25 of the pattern c as an objective variable, and generates the performance estimation model 26 for the pattern c.

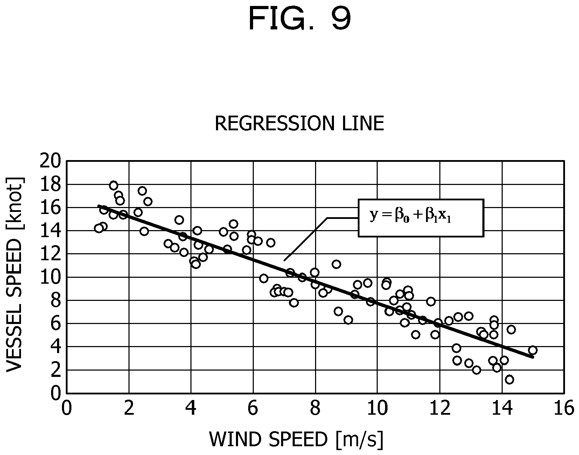

Here, an idea of the performance estimation model generation processing according to the embodiment will be described with reference to FIG. 9. FIG. 9 is a diagram illustrating an idea of the performance estimation model generation processing according to the embodiment. Note that FIG. 9 describes a case where a performance estimation model when the vessel maneuvering pattern is the pattern a at the normal output is to be generated. For convenience of explanation, only "wind speed" is employed as the explanatory variable.

As illustrated in FIG. 9, the performance estimation model generation unit 15 works out a regression line from two-dimensional coordinates when the x-axis denotes "wind speed" and the y-axis denotes "vessel speed". Here, the performance estimation model generation unit 15 searches the voyage data 25 of the pattern a and the actual meteorological/hydrographic data 22 for "vessel speed" and "wind speed" at the same time and the same position (latitude and longitude), and samples "vessel speed" and "wind speed" found by the search in the two-dimensional coordinates. Then, the performance estimation model generation unit 15 works out a regression line by the least squares method with a plurality of the sampled points.

For example, the performance estimation model generation unit 15 works out parameters $\beta_0$ and $\beta_1$ that minimize equation (2), and works out a regression line $y = \beta_0 + \beta_1 x_1$.

[Equation 1]

$$\sum_{i=1}^{n} \left( y_i - \left( \beta_1 x_{1_i} + \beta_0 \right) \right)^2 \qquad \cdots (2)$$

Note that, in FIG. 9, for convenience of explanation, only "wind speed" is employed as the explanatory variable, but the explanatory variable is not limited to this example. For example, when "wind speed" and "wind direction" are employed as the explanatory variables, the performance estimation model generation unit 15 only needs to work out the regression line $y = \beta_0 + \beta_1 x_1 + \beta_2 x_2$ from three-dimensional coordinates when the x-axis denotes "wind speed", the y-axis denotes "wind direction", and the z-axis denotes "vessel speed". Furthermore, in FIG. 9, "vessel speed" is employed as the objective variable, but the objective variable is not limited to this example. For example, "fuel consumption" may be employed as the objective variable.

Returning to FIG. 1, the performance estimation unit 16 estimates the vessel performance of the specified vessel maneuvering pattern from the forecast meteorological/hydrographic data 22 and the performance estimation model 26. For example, when accepting the specification of the vessel maneuvering pattern, the performance estimation unit 16 acquires the performance estimation model 26 corresponding to the vessel maneuvering pattern. The performance estimation unit 16 estimates the vessel performance at the target position (latitude and longitude) using the acquired performance estimation model 26 and the forecast meteorological/hydrographic data 22. The vessel performance mentioned here refers to the vessel speed and fuel consumption.

The optimal route search unit 17 searches for an optimal route for the vessel based on the vessel performance estimated by the performance estimation unit 16. For example, the optimal route search unit 17 accepts navigation conditions of a vessel from a using side who uses the navigation support processing. As an example, the using side mentioned here includes a vessel on the sea or a shipping company on the shore that use the navigation support processing. As an example, the navigation conditions of a vessel includes the departure place, arrival place, departure time, and vessel maneuvering pattern. The optimal route search unit 17 searches for an optimal route for the entire section from the departure place to the arrival place when departure is made at the specified departure time and the specified vessel maneuvering pattern is selected. As an example, the optimal route search unit 17 searches for the optimal route based on the estimated vessel performance at each position (latitude and longitude) included in the entire section, and displays the arrival time on the optimal route to the using side. As an example, the Dijkstra method, which indicates an algorithm for solving the shortest path problem, can be used to search for the optimal route, but any conventional technology may be used as long as the estimated vessel performance is used.

Furthermore, the optimal route search unit 17 saves the optimal route and the arrival time of the specified vessel maneuvering pattern in the storage unit 20 as the optimal route search result.

Note that the optimal route is a route that consumes less fuel and takes less time in operation in each selected vessel maneuvering pattern. For example, when the vessel maneuvering pattern is the pattern a at the normal output, the optimal route is a route that consumes less fuel and takes less time when making a voyage in the pattern a. The same applies to a case where the vessel maneuvering pattern is the pattern b at the medium output and a case where the vessel maneuvering pattern is the pattern c at the small output.

Furthermore, after finding the optimal route for the entire section from the departure place to the arrival place, the optimal route search unit 17 may modify a partial section of the optimal route with another vessel maneuvering pattern according to an instruction from the using side, and display the arrival time in consideration of the modified optimal route to the using side. In such a case, the optimal route search unit 17 searches for an optimal route when the specified vessel maneuvering pattern is selected for a partial section in the entire section of the optimal route. As an example, the optimal route search unit 17 can modify a partial section of the optimal route based on the estimated vessel performance at each position (latitude and longitude) included in the partial section, and display the arrival time on the entire section of the optimal route.

[Example of Performance Estimation Processing and Optimal Route Search Processing]

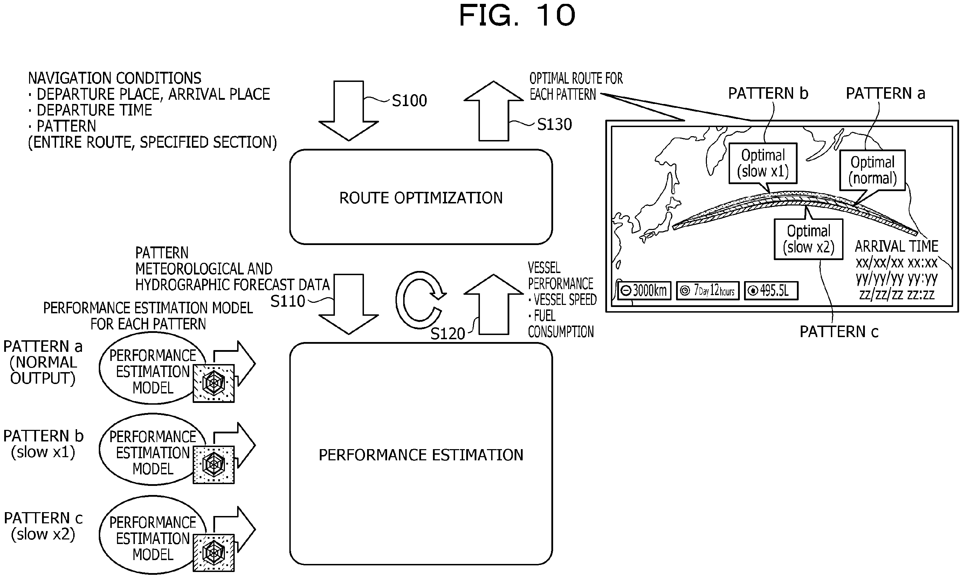

FIG. 10 is a diagram illustrating an example of the performance estimation processing and the optimal route search processing according to the embodiment. As illustrated in FIG. 10, the optimal route search unit 17 accepts the departure place, the arrival place, the departure time, and the vessel maneuvering pattern, for example, from a vessel as navigation conditions for the vessel (S100). The optimal route search unit 17 makes an inquiry about the vessel performance (for example, the vessel speed) when the vessel is maneuvered in the accepted vessel maneuvering pattern for each position (latitude and longitude) included in the section from the departure place to the arrival place (S110).

When accepting the specification of the vessel maneuvering pattern and the target position, the performance estimation unit 16 acquires the performance estimation model 26 corresponding to the vessel maneuvering pattern. The performance estimation unit 16 estimates the vessel performance (for example, the vessel speed) at the target position (latitude and longitude) using the acquired performance estimation model 26 and the forecast meteorological/hydrographic data 22. Then, the performance estimation unit 16 feeds back with the estimated vessel performance (for example, the vessel speed) (S120). The performance estimation unit 16 repeatedly estimates the vessel performance for all the specified target positions, and feeds back with the estimated vessel performance.

Subsequently, the optimal route search unit 17 searches for an optimal route in the accepted vessel maneuvering pattern, based on the estimated vessel performance (for example, the vessel speed) at each position (latitude and longitude) included in the section, and displays the arrival time on the optimal route to the vessel (S130). Here, on the vessel side, the optimal route for each vessel maneuvering pattern is displayed. The optimal route whose vessel maneuvering pattern is the pattern a at the normal output is the route indicated by Optimal (normal). The optimal route whose vessel maneuvering pattern is the pattern b at the medium output is the route indicated by Optimal (slow x1). The optimal route whose vessel maneuvering pattern is the pattern c at the small output is the route indicated by Optimal (slow x2). Additionally, the arrival time when a voyage is made in each pattern is displayed.

Moreover, when a partial section in the entire section of the optimal route in any of the vessel maneuvering patterns is changed to another vessel maneuvering pattern, the optimal route search unit 17 accepts the partial section and the another vessel maneuvering pattern, for example, from the vessel (S100) . The optimal route search unit 17 makes an inquiry about the vessel performance (for example, the vessel speed) when the vessel is maneuvered in the accepted another vessel maneuvering pattern for each position (latitude and longitude) included in the partial section (S110).

When accepting the specification of the another vessel maneuvering pattern and the target position, the performance estimation unit 16 acquires the performance estimation model 26 corresponding to the another vessel maneuvering pattern. The performance estimation unit 16 estimates the vessel performance (for example, the vessel speed) at the target position (latitude and longitude) using the acquired performance estimation model 26 and the forecast meteorological/hydrographic data 22. Then, the performance estimation unit 16 feeds back with the estimated vessel performance (for example, the vessel speed) (S120). The performance estimation unit 16 repeatedly estimates the vessel performance for all the specified target positions, and feeds back with the estimated vessel performance.

Subsequently, the optimal route search unit 17 modifies the partial section of the optimal route with the another vessel maneuvering pattern, based on the estimated vessel performance (for example, the vessel speed) at each position (latitude and longitude) included in the partial section. Thereafter, the optimal route search unit 17 displays the arrival time on the entire section of the optimal route to the vessel in consideration of the modified optimal route (S130).

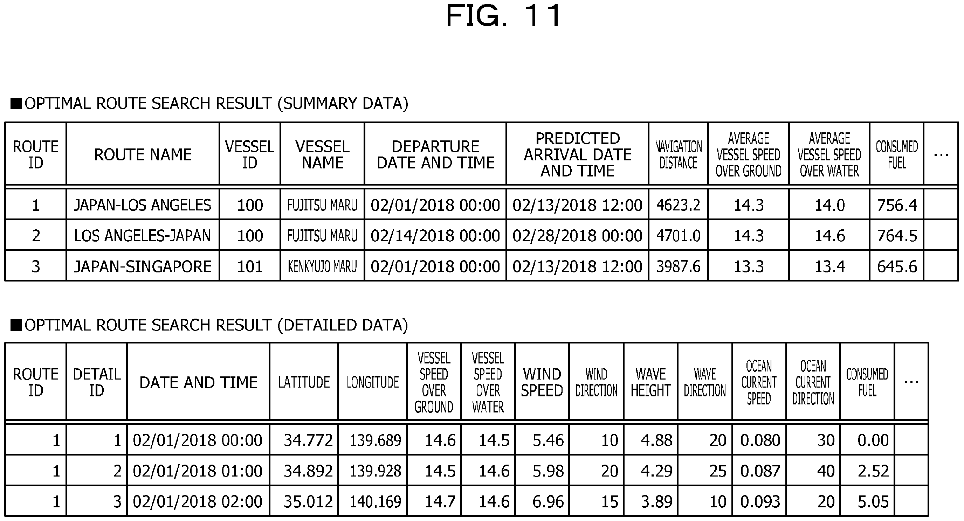

FIG. 11 is a diagram illustrating an example of the optimal route search result according to the embodiment. The upper figure in FIG. 11 illustrates summary data of the optimal route search result. The lower figure in FIG. 11 illustrates detailed data of the optimal route search result.

[Operation Example for Optimal Route Search when Section is Specified]

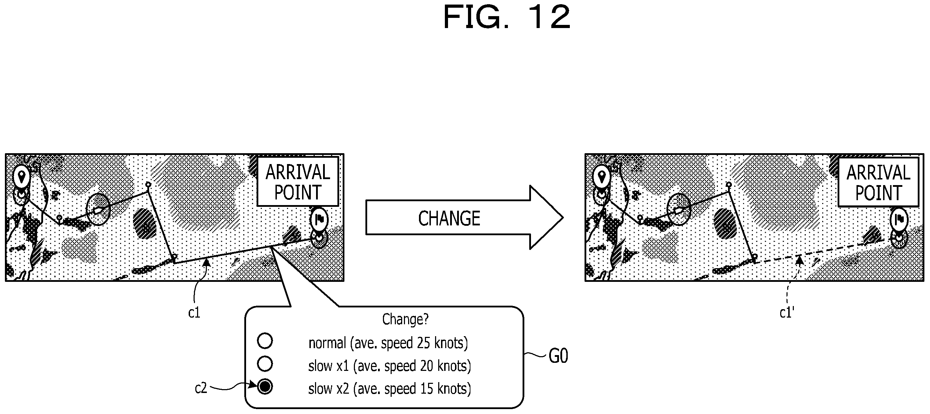

Here, an operation example for an optimal route search when a partial section of an optimal route when a voyage is made on the entire route in a first pattern is changed to a second pattern will be described with reference to FIG. 12. FIG. 12 is a diagram illustrating an operation example for an optimal route search when a section is specified. Note that, in FIG. 12, a case where the user selects the pattern c at the small output instead of the pattern a at the normal output for a partial section in order to decrease the fuel consumption amount is supposed. The user mentioned here is, for example, a captain.

As illustrated in FIG. 12, when the user specifies a partial section c1 of the optimal route, an option screen G0 including a plurality of voyage patterns is presented. Here, it is supposed that the optimal route in the pattern a at the normal output is currently displayed. The user selects the pattern c option from the option screen G0 in order to change the partial section c1 of the optimal route in the pattern a to the pattern c at the small output (c2). Following the above, the optimal route search unit 17 is allowed to execute the simulation in order to change the specified partial section c1 to a section c1' when the vessel is maneuvered in the pattern c different from the pattern a.

[Example of Optimal Route Search when Section is Specified]

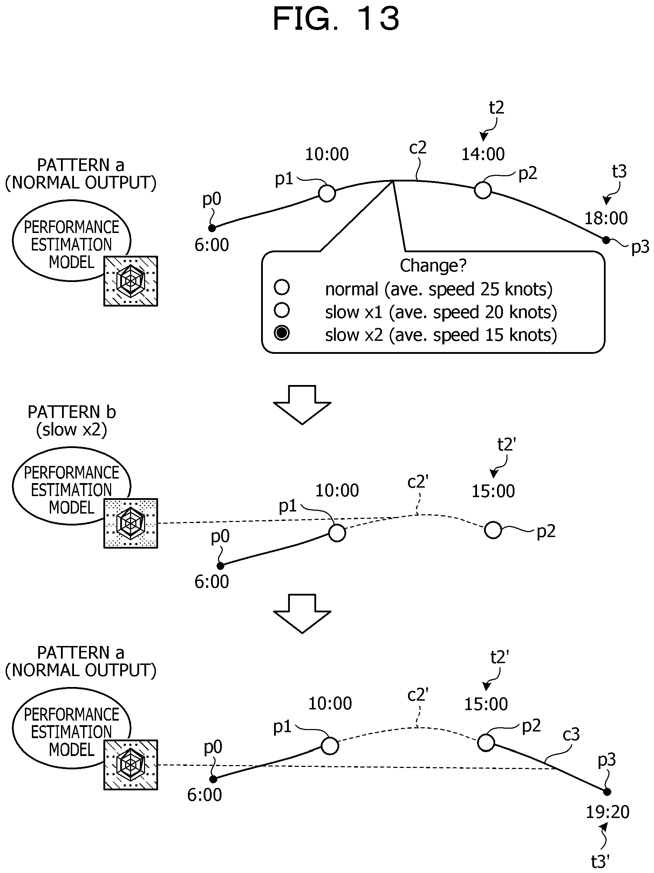

Here, an example of a simulation of an optimal route search when a partial section of an optimal route when a voyage is made on the entire route in a first pattern is changed to a second pattern will be described with reference to FIG. 13. FIG. 13 is a diagram illustrating an example of a simulation of an optimal route search when a section is specified. Note that, in FIG. 13, a case where the user selects the pattern c at the small output instead of the pattern a at the normal output for a partial section in order to decrease the fuel consumption amount is supposed. The user mentioned here is, for example, a captain.

As illustrated in the upper part of FIG. 13, the optimal route search unit 17 uses the pattern a to search for an optimal route from a position p0 of the departure place to a position p3 of the arrival place found by search using the performance estimation model for the pattern a, and displays the arrival time on the optimal route to the using side. Here, it is supposed that the departure time at the position p0 is "6:00". It is supposed that the time at a position p1 is "10:00". It is supposed that the time at a position p2 is "14:00" indicated by t2. Then, it is supposed that the arrival time at the position p3 is "18:00".

Here, the user selects the pattern c option from the option screen G0 for the section c2 from the position p1 to the position p2.

Following the above, as illustrated in the middle part of FIG. 13, the optimal route search unit 17 searches for an optimal route for the specified partial section c2 using the performance estimation model for the pattern c, and displays the arrival time on an optimal route c2'. Here, it is supposed that the time at the position p1 is "10:00". It is supposed that the time at the position p2 is "15:00" indicated by t2'. In this manner, the optimal route search unit 17 can display the optimal route and arrival time changed using the performance estimation model for the pattern c when a partial section when a voyage is made in the pattern a is changed to the pattern c.

Then, as illustrated in the lower part of FIG. 13, the optimal route search unit 17 searches for an optimal route succeeding the specified partial section using the performance estimation model for the pattern a, and displays the arrival time on an optimal route c3. Here, it is supposed that the time at the position p2 is "15:00" indicated by t2'. It is supposed that the arrival time at the position p3 is "19:20" indicated by t3'. In this manner, the optimal route search unit 17 can display the optimal route and the arrival time for the section succeeding the specified partial section using the performance estimation model for the pattern a. In such a case, it can be seen that the arrival time is delayed as compared with the case of the pattern a because the user has changed a partial section to the pattern c at the small output instead of the pattern a at the normal output.

[Flowchart of Model Learning Phase]

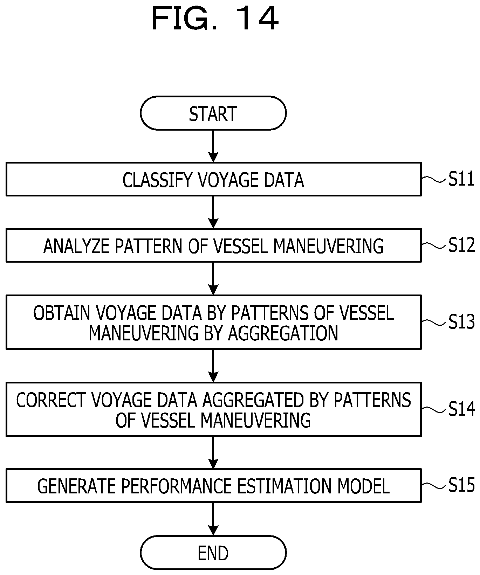

FIG. 14 is a diagram illustrating an example of a flowchart of a model learning phase according to the embodiment.

As illustrated in FIG. 14, the voyage data classification unit 12 classifies the voyage data 21 (step S11), and generates the voyage data 23 for each meteorological and hydrographic condition.

The pattern extraction unit 13 analyzes the pattern of vessel maneuvering from the voyage data 23 for each meteorological and hydrographic condition (step S12). As a result of the analysis, the voyage data aggregation unit 14 aggregates the voyage data 23 for each meteorological and hydrographic condition to obtain the voyage data by patterns of vessel maneuvering (step S13), and saves the voyage data 25 for each pattern. Then, the voyage data aggregation unit 14 corrects the voyage data aggregated by patterns of vessel maneuvering (step S14). Subsequently, the performance estimation model generation unit 15 generates the performance estimation model using the voyage data by patterns (the voyage data 25 for each pattern) (step S15) . Thereafter, the performance estimation model generation unit 15 saves the generated performance estimation model in the performance estimation model 26.

[Flowchart of Service Provision Phase]

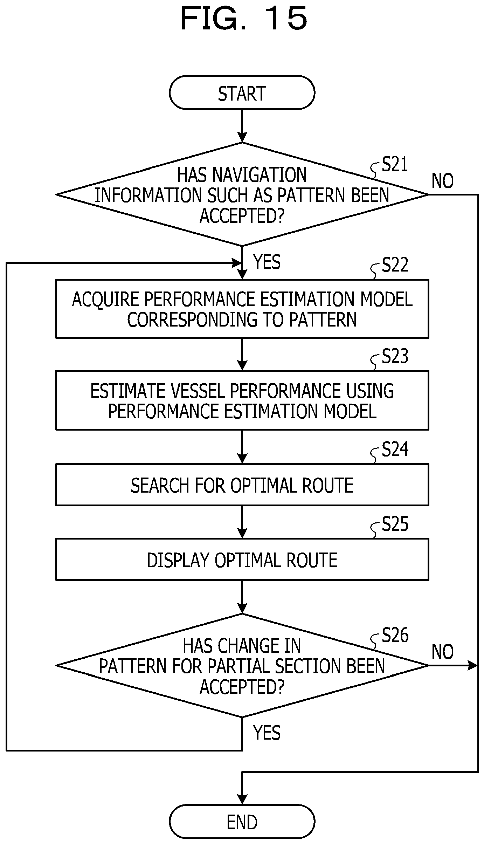

FIG. 15 is a diagram illustrating an example of a flowchart of a service provision phase according to the embodiment.

As illustrated in FIG. 15, the optimal route search unit 17 determines whether navigation information such as the pattern has been accepted from the using side (step S21) . As an example, the using side mentioned here includes a vessel on the sea or a shipping company on the shore that use the navigation support processing. When it is determined that the navigation information has not been accepted (step S21; No), the optimal route search unit 17 ends the optimal route search processing.

On the other hand, when it is determined that the navigation information has been accepted (step S21; Yes), the performance estimation unit 16 acquires a performance estimation model corresponding to the accepted pattern (step S22). The performance estimation unit 16 estimates the vessel performance using the forecast meteorological/hydrographic data 22 and the performance estimation model (step S23). Then, the optimal route search unit 17 searches for an optimal route for the vessel, based on the estimated vessel performance (step S24). Subsequently, the optimal route search unit 17 displays the optimal route found by the search to the using side (step S25) .

Thereafter, the optimal route search unit 17 determines whether a change in the pattern for a partial section in the whole section of the optimal route has been accepted from the using side (step S26). When it is determined that a change in the pattern for a partial section has been accepted (step S26; Yes), the optimal route search unit 17 proceeds to step S22. For example, the optimal route search unit 17 proceeds to step S22 in order to search for a route with a pattern changed for the partial section and to search for a route with the original pattern for a section succeeding the partial section.

On the other hand, when it is determined that a change in the pattern for a partial section has not been accepted (step S26; No), the optimal route search unit 17 ends the optimal route search processing.

[Autopilot Cooperation]

Note that the optimal route search unit 17 has been described to, when accepting an instruction from the using side, search for an optimal route according to the instruction and display the optimal route found by the search to the using side. The using side may use the optimal route to cooperate the optimal route with autopilot control that automatically operates the rudder. For example, an autopilot cooperation unit 31 (not illustrated) on the vessel side can cooperate the optimal route found by search by the optimal route search unit 17 with the autopilot. For example, the autopilot cooperation unit 31 acquires the optimal route search result for the optimal route found by search by the optimal route search unit 17. The autopilot cooperation unit 31 acquires the current position of the vessel using a global positioning system (GPS). Then, the autopilot cooperation unit 31 calculates a direction in which the vessel is expected to move, using the current position of the vessel and the optimal route. Subsequently, the autopilot cooperation unit 31 calculates the steering angle indicating the angle between the calculated direction and the current direction, using the calculated direction and a direction sensor. Thereafter, the autopilot cooperation unit 31 instructs a steering unit of the vessel on the calculated steering angle. This allows the autopilot cooperation unit 31 to automatically operate the rudder of the vessel by cooperating the optimal route with the autopilot.

[Flowchart of Autopilot Cooperation Processing]

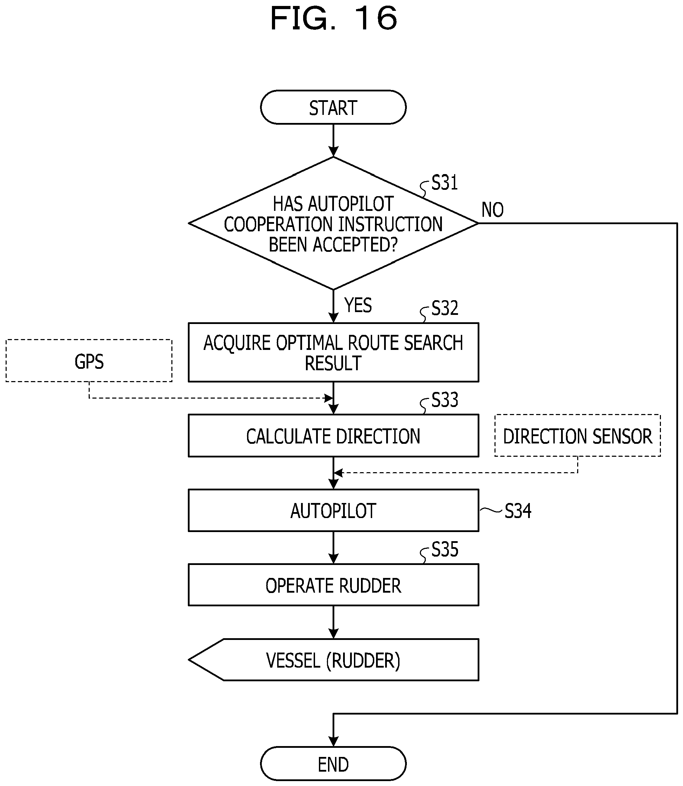

FIG. 16 is a diagram illustrating an example of a flowchart of autopilot cooperation processing according to the embodiment. Note that it is supposed that the autopilot cooperation processing is performed by, for example, the autopilot cooperation unit 31 on the vessel side. Furthermore, on the vessel side, it is supposed that the optimal route displayed by the optimal route search unit 17 has been represented.

As illustrated in FIG. 16, the autopilot cooperation unit 31 determines whether an autopilot cooperation instruction has been accepted (step S31). When it is determined that the autopilot cooperation instruction has not been accepted (step S31; No), the autopilot cooperation unit 31 ends the autopilot cooperation processing.

On the other hand, when it is determined that the autopilot cooperation instruction has been accepted (step S31; Yes), the autopilot cooperation unit 31 acquires the optimal route search result for the displayed optimal route (step S32). Then, the autopilot cooperation unit 31 acquires the current position of the vessel using the GPS, and calculates a direction in which the vessel is expected to move, using the current position of the vessel and the optimal route search result (step S33).

Subsequently, the autopilot cooperation unit 31 performs autopilot using the calculated direction and the direction sensor, and calculates the steering angle (step S34). For example, the autopilot cooperation unit 31 acquires the direction in which the vessel is currently moving, using the direction sensor. The autopilot cooperation unit 31 calculates a steering angle indicating the angle between the currently moving direction and the calculated direction in which the vessel is expected to move.

Thereafter, the autopilot cooperation unit 31 operates the steering unit using the steering angle (step S35). As a result, the rudder of the vessel is operated.

[Usage Example of Navigation Support Processing]

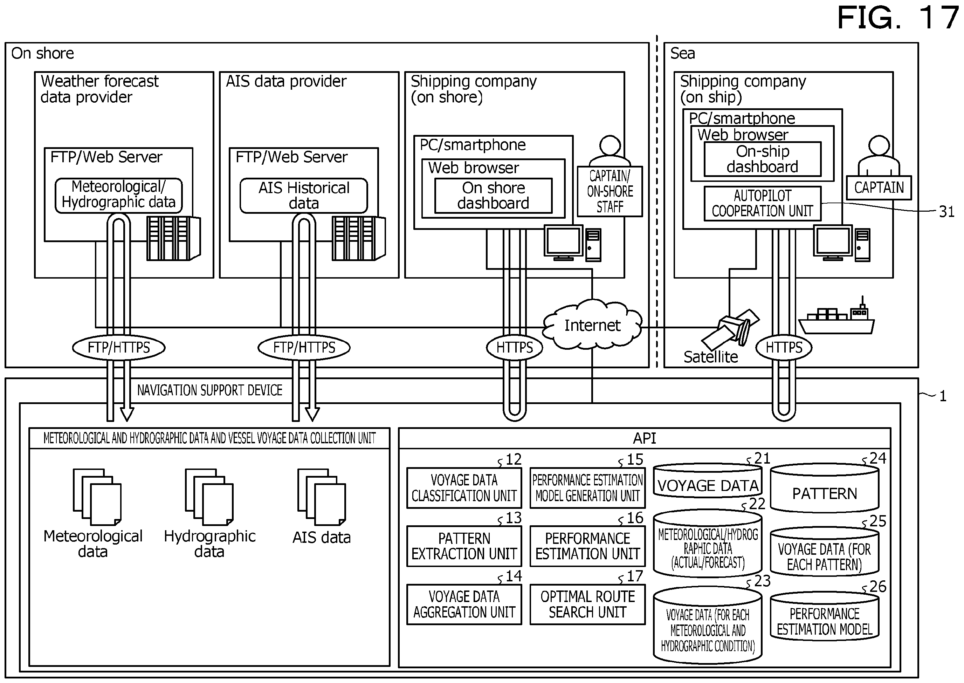

FIG. 17 is a diagram illustrating a usage example of the navigation support processing according to the embodiment. As illustrated in FIG. 17, the navigation support device 1 is connected through a network with a vessel on the sea (Sea) that uses the navigation support processing. The navigation support device 1 is connected through a network with a shipping company (Shipping company) on the shore (on shore). Furthermore, the navigation support device 1 is connected to various providers on the shore (on shore) through networks. Various providers include a provider of weather forecast data (Weather forecast data provider) and a provider of AIS data (AIS data provider).

The navigation support device 1 collects actual and forecast meteorological and hydrographic data from the provider of weather forecast data. The navigation support device 1 collects voyage data from the provider of AIS data. The collected meteorological and hydrographic data and voyage data are reflected in the voyage data 21 and the meteorological/hydrographic data (actual/forecast) 22.

Prior to the navigation, the captain or on-shore staff inquires of the navigation support device 1 about the optimal route. Furthermore, the captain can also inquire of the navigation support device 1 about the optimal route during the navigation.

Upon accepting navigation conditions contained in the inquiry, the navigation support device 1 searches for an optimal route for the section from the departure place to the arrival place of the vessel when the departure is made at the departure time and the specified vessel maneuvering pattern is selected. Then, the navigation support device 1 responds to the inquiry source with the optimal route found by the search. Consequently, the navigation support device 1 can present an accurate optimal route according to the vessel maneuvering pattern.

Furthermore, after having found the optimal route by the search, the navigation support device 1 further modifies a partial section of the optimal route with another vessel maneuvering pattern in response to an inquiry about a change in the partial section, and searches for a modified optimal route. Then, the navigation support device 1 responds to the inquiry source with the modified optimal route. Consequently, the navigation support device 1 can simulate the optimal route in which a partial section is replaced with another vessel maneuvering pattern.

In addition, an information processing device (a personal computer (PC) or a smartphone) in the vessel may include the autopilot cooperation unit 31. The autopilot cooperation unit 31 cooperates the simulated optimal route with the autopilot. For example, the autopilot cooperation unit 31 calculates the steering angle using the optimal route, the current position of the vessel, and the current direction of the vessel, and instructs the steering unit of the vessel to operate the rudder of the vessel. This allows the autopilot cooperation unit 31 to automatically operate the rudder of the vessel by cooperating the optimal route with the autopilot.

[Effects of Embodiments]

According to the above embodiment, the navigation support device 1 stores the performance estimation models 26 regarding speed of a vessel for each of vessel maneuvering patterns. The navigation support device 1 accepts one of the vessel maneuvering patterns to be used in a navigation. The navigation support device 1 calculates the speed of the vessel on a route of the vessel, based on the one of the performance estimation models corresponding to the accepted one of the vessel maneuvering patterns among the performance estimation models 26, and the meteorological/hydrographic data 22 of the usage. The navigation support device 1 displays the arrival time on the route that is optimal, based on the calculated speed of the vessel. According to such a configuration, the navigation support device 1 can present an accurate optimal route according to the vessel maneuvering pattern, by using the performance estimation model 26 for the speed of the vessel (vessel performance) for each vessel maneuvering pattern.

Furthermore, according to the above embodiment, for a partial section of the route that is optimal, the navigation support device 1 calculates the speed of the vessel in the partial section, based on one of the performance estimation models of another one of the vessel maneuvering patterns among the performance estimation models 26. The navigation support device 1 modifies the route for the entire section that is optimal, based on the calculated speed of the vessel in the partial section, and displays the arrival time on the route that is optimal and modified. According to such a configuration, the navigation support device 1 can execute a simulation of an optimal route when a partial section of the optimal route is changed to another vessel maneuvering pattern. As a result, the navigation support device 1 can present an accurate optimal route according to the vessel maneuvering pattern even when a partial section of the optimal route is changed to another vessel maneuvering pattern.

In addition, according to the above embodiment, the autopilot cooperation unit 31 calculates a direction in which the vessel is expected to move with respect to the current position of the vessel, from the route that is optimal. The autopilot cooperation unit 31 calculates the steering angle using a direction in which the vessel is currently being maneuvered and the direction in which the vessel is expected to move. The autopilot cooperation unit 31 controls the steering of the vessel based on the calculated steering angle. According to such a configuration, the autopilot cooperation unit 31 can automatically operate the rudder of the vessel by cooperating the route that is optimal, with the autopilot.

In addition, according to the above embodiment, the navigation support device 1 classifies the voyage data 21 according to each meteorological and hydrographic condition. The navigation support device 1 calculates the characteristic distribution of vessel maneuvering for each meteorological and hydrographic condition using the classified voyage data 23. The navigation support device 1 extracts a plurality of vessel maneuvering patterns from the calculated characteristic distribution of vessel maneuvering for each meteorological and hydrographic condition, and aggregates the voyage data for each vessel maneuvering pattern. The navigation support device 1 generates a learning model for each vessel maneuvering pattern from the voyage data aggregated for each vessel maneuvering pattern, using meteorological and hydrographic actual data as the explanatory variable and the vessel performance as the objective variable. According to such a configuration, the navigation support device 1 can accurately recommend an optimal route according to the vessel maneuvering pattern, by using the learning model for the vessel performance for each vessel maneuvering pattern. For example, the navigation support device 1 is allowed to estimate the optimal route that suits the captain's sense by learning the vessel maneuvering actually performed by the captain. As a result, the navigation support device 1 can obtain an economic effect by reducing the fuel expense cost and reducing the navigation time, and an environmental effect by reducing carbon dioxide $CO_2$.

[Others]

Note that each illustrated component of the navigation support device 1 is not necessarily physically configured as illustrated in the drawings. For example, specific aspects of separation and integration of the navigation support device 1 are not limited to the illustrated ones, and all or a part of the device can be functionally or physically separated and integrated in an optional unit according to various loads, use states, or the like. For example, the voyage data classification unit 12 and the pattern extraction unit 13 may be integrated as one unit. Furthermore, the voyage data aggregation unit 14 may be split into an aggregation unit that aggregates the voyage data 23 for each meteorological and hydrographic condition to generate the voyage data 25 for each vessel maneuvering pattern, and a correction unit that corrects the voyage data 25 for each vessel maneuvering pattern. In addition, the storage unit 20 may be connected by way of a network as an external device of the navigation support device 1.

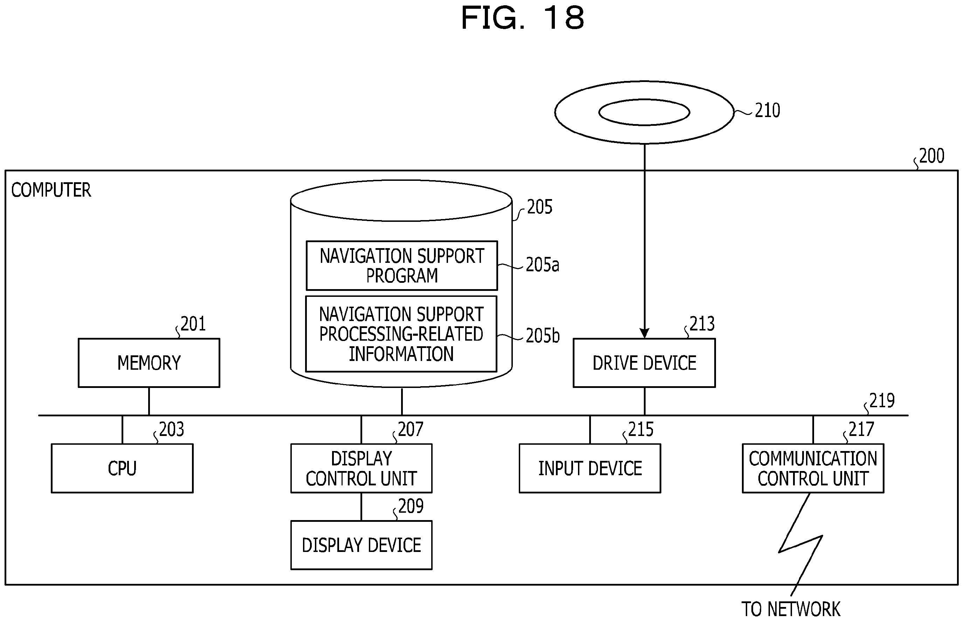

Furthermore, various types of processing described in the above embodiment can be achieved by a computer such as a personal computer or a work station executing programs prepared in advance. Thus, in the following, an example of a computer that executes a navigation support program that achieves functions similar to the functions of the navigation support device 1 illustrated in FIG. 1 will be described. FIG. 18 is a diagram illustrating an example of a computer that executes the navigation support program.

As illustrated in FIG. 18, a computer 200 includes a CPU 203 that executes various types of arithmetic processing, an input device 215 that accepts data input from a user, and a display control unit 207 that controls a display device 209. Furthermore, the computer 200 also includes a drive device 213 that reads a program or the like from a storage medium, and a communication control unit 217 that exchanges data with another computer via a network. In addition, the computer 200 includes a memory 201 that temporarily stores various types of information, and a hard disk drive (HDD) 205. Then, the memory 201, the CPU 203, the HDD 205, the display control unit 207, the drive device 213, the input device 215, and the communication control unit 217 are connected by a bus 219.

The drive device 213 is a device for a removable disk 210, for example. The HDD 205 stores a navigation support program 205a and navigation support processing-related information 205b.

The CPU 203 reads the navigation support program 205a, and loads the navigation support program 205a into the memory 201 to execute the navigation support program 205a as a process. Such a process corresponds to the respective functional units of the navigation support device 1. The navigation support processing-related information 205b corresponds to the voyage data 21, the meteorological/hydrographic data (actual/forecast) 22, the voyage data (for each meteorological and hydrographic condition) 23, the pattern 24, the voyage data (for each pattern) 25, and the performance estimation model 26. Then, for example, the removable disk 210 stores each piece of information such as the navigation support program 205a.

Note that the navigation support program 205a may not necessarily be stored in the HDD 205 from the beginning. For example, the program is stored in a "portable physical medium" such as a flexible disk (FD), a compact disk read only memory (CD-ROM), a digital versatile disk (DVD), a magneto-optical disk, or an integrated circuit (IC) card, which is inserted into the computer 200. Then, the computer 200 may read the navigation support program 205a from these media to execute the navigation support program 205a.

REFERENCE SIGNS LIST

| | |
|---|---|
| 1 | navigation support device |
| 10 | control unit |
| 11 | data collection unit |
| 12 | voyage data classification unit |
| 13 | pattern extraction unit |
| 14 | voyage data aggregation unit |
| 15 | performance estimation model generation unit |
| 16 | performance estimation unit |
| 17 | optimal route search unit |
| 20 | storage unit |
| 21 | voyage data |
| 22 | meteorological/hydrographic data (actual/forecast) |
| 23 | voyage data (for each meteorological and hydrographic condition) |
| 24 | pattern |
| 25 | voyage data (for each pattern) |
| 26 | performance estimation model |
| 31 | autopilot cooperation unit |

**Claims**

1. A navigation support method executed by a computer, the navigation support method comprising:

   storing performance estimation models regarding speed of a vessel for vessel maneuvering patterns, the vessel maneuvering patterns indicating different engine outputs;
   receiving, form a using side, navigation information including one of the vessel maneuvering patterns to be used in a navigation support operation of the using side;
   calculating the speed of the vessel on a route of the vessel, based on one of the performance estimation models that corresponds to the received one of the vessel maneuvering patterns among the performance estimation models, and meteorological and hydrographic forecast data;
   displaying an arrival time on a route that is optimal, based on the speed of the vessel that has been calculated;
   **characterized by**:

   classifying vessel voyage data according to meteorological and hydrographic conditions;
   calculating a characteristic distribution of vessel maneuvering for each meteorological and hydrographic condition, using the vessel voyage data that has been classified;
   extracting a plurality of the vessel maneuvering patterns from the characteristic distribution of vessel maneuvering that has been calculated for each meteorological and hydrographic condition;
   aggregating the vessel voyage data for each of the vessel maneuvering patterns; and
   generating the performance estimation models for each of the vessel maneuvering patterns from the vessel voyage data aggregated for each of the vessel maneuvering patterns, using meteorological and hydrographic actual data as an explanatory variable and vessel performance as an objective variable.

2. The navigation support method according to claim 1, wherein

   for a partial section of the route that is optimal, the calculating calculates the speed of the vessel in the partial section, based on one of the performance estimation models of another one of the vessel maneuvering patterns among the performance estimation models, and
   the displaying modifies the route that is optimal for an entire section, based on the speed of the vessel in the partial section that has been calculated, and displays the arrival time on the route that is optimal and modified.

3. The navigation support method according to claim 1, further comprising:

calculating a direction in which the vessel is expected to move with respect to a current position of the vessel, from the route that is optimal;

calculating a steering angle using a direction in which the vessel is currently being maneuvered and the direction in which the vessel is expected to move; and

controlling steering of the vessel based on the steering angle that has been calculated.

4. A navigation support device (1) comprising:

a storage unit (20) configured to store performance estimation models regarding speed of a vessel for vessel maneuvering patterns, the vessel maneuvering patterns indicating different engine outputs;

a calculation unit configured to receive, form a using side, navigation information including one of the vessel maneuvering patterns to be used in a navigation support operation of the using side and calculate the speed of the vessel on a route of the vessel, based on one of the performance estimation models that corresponds to the received one of the vessel maneuvering patterns among the performance estimation models, and meteorological and hydrographic forecast data; and

a display unit configured to display an arrival time on a route that is optimal, based on the speed of the vessel that has been calculated;

characterized in that the calculation unit is further configured to:

classify vessel voyage data according to meteorological and hydrographic conditions;

calculate a characteristic distribution of vessel maneuvering for each meteorological and hydrographic condition, using the vessel voyage data that has been classified;

extract a plurality of the vessel maneuvering patterns from the characteristic distribution of vessel maneuvering that has been calculated for each meteorological and hydrographic condition;

aggregate the vessel voyage data for each of the vessel maneuvering patterns;

and generate the performance estimation models for each of the vessel maneuvering patterns from the vessel voyage data aggregated for each of the vessel maneuvering patterns, using meteorological and hydrographic actual data as an explanatory variable and vessel performance as an objective variable.

5. A navigation support program causing a computer to execute a processing, the processing comprising:

storing performance estimation models regarding speed of a vessel for vessel maneuvering patterns, the vessel maneuvering patterns indicating different engine outputs;

receiving, form a using side, navigation information including one of the vessel maneuvering patterns to be used in a navigation support operation of the using side;

calculating the speed of the vessel on a route of the vessel, based on one of the performance estimation models that corresponds to the received one of the vessel maneuvering patterns among the performance estimation models, and meteorological and hydrographic forecast data;

and displaying an arrival time on a route that is optimal, based on the speed of the vessel that has been calculated; characterized in that the processing further comprises:

classifying vessel voyage data according to meteorological and hydrographic conditions;

calculating a characteristic distribution of vessel maneuvering for each meteorological and hydrographic condition, using the vessel voyage data that has been classified;

extracting a plurality of the vessel maneuvering patterns from the characteristic distribution of vessel maneuvering that has been calculated for each meteorological and hydrographic condition;

aggregating the vessel voyage data for each of the vessel maneuvering patterns; and

generating the performance estimation models for each of the vessel maneuvering patterns from the vessel voyage data aggregated for each of the vessel maneuvering patterns, using meteorological and hydrographic actual data as an explanatory variable and vessel performance as an objective variable.

**Patentansprüche**

1. Navigationsunterstützungsverfahren, das von einem Computer ausgeführt wird, wobei das Navigationsunterstützungsverfahren Folgendes umfasst:

Speichern von Leistungsschätzungsmodellen in Bezug auf eine Geschwindigkeit eines Schiffes für Schiffsmanövriermuster, wobei die Schiffsmanövriermuster unterschiedliche Maschinenleistungen angeben;

Empfangen von Navigationsinformationen von einer verwendenden Seite, die eines der Schiffsmanövriermuster einschließen, das in einer Navigationsunterstützungsoperation der verwendenden Seite verwendet werden soll; Berechnen der Geschwindigkeit des Schiffes auf einer Route des Schiffes auf der Grundlage eines der Leistungsschätzungsmodelle, das dem empfangenen der Schiffsmanövriermuster unter den Leistungsschätzungsmodellen entspricht, und meteorologischer und hydrographischer Vorhersagedaten; Anzeigen einer Ankunftszeit auf einer Route, die optimal ist, auf der Grundlage der Geschwindigkeit des Schiffes, die berechnet wurde; **gekennzeichnet durch**:

Klassifizieren von Schiffsreisedaten gemäß meteorologischen und hydrographischen Bedingungen; Berechnen einer charakteristischen Schiffsmanövrierverteilung für jede meteorologische und hydrographische Bedingung unter Verwendung der Schiffsreisedaten, die klassifiziert wurden; Extrahieren einer Vielzahl der Schiffsmanövriermuster aus der charakteristischen Schiffsmanövrierverteilung, die für jede meteorologische und hydrographische Bedingung berechnet wurde; Aggregieren der Schiffsreisedaten für jedes der Schiffsmanövriermuster; und Erzeugen der Leistungsschätzungsmodelle für jedes der Schiffsmanövriermuster aus den für jedes der Schiffsmanövriermuster aggregierten Schiffsreisedaten unter Verwendung von meteorologischen und hydrographischen Ist-Daten als eine erklärende Variable und Schiffsleistung als eine Zielvariable.

2. Navigationsunterstützungsverfahren nach Anspruch 1, wobei

für einen Teilabschnitt der Route, der optimal ist, das Berechnen die Geschwindigkeit des Schiffes in dem Teilabschnitt auf der Grundlage eines der Leistungsschätzungsmodelle eines anderen der Schiffsmanövriermuster unter den Leistungsschätzungsmodellen berechnet, und

das Anzeigen die Route, die für einen gesamten Abschnitt optimal ist, auf der Grundlage der Geschwindigkeit des Schiffes in dem Teilabschnitt, die berechnet wurde, modifiziert und die Ankunftszeit auf der Route, die optimal und modifiziert ist, anzeigt.

3. Navigationsunterstützungsverfahren nach Anspruch 1, weiter umfassend:

Berechnen einer Richtung, in die sich das Schiff in Bezug auf eine aktuelle Position des Schiffes voraussichtlich bewegen wird, aus der Route, die optimal ist; Berechnen eines Steuerwinkels unter Verwendung einer Richtung, in die das Schiff gegenwärtig manövriert wird, und der Richtung, in die sich das Schiff voraussichtlich bewegen wird; und Steuern des Steuerns des Schiffes auf der Grundlage des Steuerwinkels, der berechnet wurde.

4. Navigationsunterstützungsvorrichtung (1), umfassend:

eine Speichereinheit (20), die konfiguriert ist, um Leistungsschätzungsmodelle in Bezug auf eine Geschwindigkeit eines Schiffes für Schiffsmanövriermuster zu speichern, wobei die Schiffsmanövriermuster unterschiedliche Maschinenleistungen angeben; eine Berechnungseinheit, die konfiguriert ist, um von einer verwendenden Seite Navigationsinformationen einschließlich eines der Schiffsmanövriermuster zu empfangen, die in einer Navigationsunterstützungsoperation der verwendenden Seite verwendet werden sollen, und die Geschwindigkeit des Schiffes auf einer Route des Schiffes auf der Grundlage eines der Leistungsschätzungsmodelle, das dem empfangenen der Schiffsmanövriermuster unter den Leistungsschätzungsmodellen entspricht, und meteorologischer und hydrographischer Vorhersagedaten zu berechnen; und eine Anzeigeeinheit, die konfiguriert ist, um eine Ankunftszeit auf einer Route anzuzeigen, die optimal ist, auf der Grundlage der Geschwindigkeit des Schiffes, die berechnet wurde; **dadurch gekennzeichnet, dass** die Berechnungseinheit weiter konfiguriert ist zum: Klassifizieren von Schiffsreisedaten gemäß meteorologischen und hydrographischen Bedingungen; Berechnen einer charakteristischen Schiffsmanövrierverteilung für jede meteorologische und hydrographische Bedingung unter Verwendung der Schiffsreisedaten, die klassifiziert wurden; Extrahieren einer Vielzahl von Schiffsmanövriermustern aus der charakteristischen Schiffsmanövrierverteilung, die für jede meteorologische und hydrographische Bedingung berechnet wurde; Aggregieren der Schiffsreisedaten für jedes der Schiffsmanövriermuster; und Erzeugen der Leistungsschätzungsmodelle für jedes der Schiffsmanövriermuster aus den für jedes der Schiffsmanövriermuster aggregierten Schiffsreisedaten unter Verwendung von meteorologischen und hydrographischen Ist-Daten als eine erklärende Variable und Schiffsleistung als eine Zielvariable.

**5.** Navigationsunterstützungsprogramm, das einen Computer veranlasst, eine Verarbeitung auszuführen, wobei die Verarbeitung umfasst:

Speichern von Leistungsschätzungsmodellen in Bezug auf eine Geschwindigkeit eines Schiffes für Schiffsmanövriermuster, wobei die Schiffsmanövriermuster unterschiedliche Maschinenleistungen angeben;
Empfangen von Navigationsinformationen von einer verwendenden Seite, die eines der Schiffsmanövriermuster einschließen, das in einer Navigationsunterstützungsoperation der verwendenden Seite verwendet werden soll;
Berechnen der Geschwindigkeit des Schiffes auf einer Route des Schiffes auf der Grundlage eines der Leistungsschätzungsmodelle, das dem empfangenen der Schiffsmanövriermuster unter den Leistungsschätzungsmodellen entspricht, und meteorologischen und hydrographischen Vorhersagedaten; und Anzeigen einer Ankunftszeit auf einer Route, die optimal ist, auf der Grundlage der Geschwindigkeit des Schiffes, die berechnet wurde;
**dadurch gekennzeichnet, dass** die Verarbeitung weiter umfasst:

Klassifizieren von Schiffsreisedaten gemäß meteorologischen und hydrographischen Bedingungen;
Berechnen einer charakteristischen Schiffsmanövrierverteilung für jede meteorologische und hydrographische Bedingung unter Verwendung der Schiffsreisedaten, die klassifiziert wurden;
Extrahieren einer Vielzahl der Schiffsmanövriermuster aus der charakteristischen Schiffsmanövrierverteilung, die für jede meteorologische und hydrographische Bedingung berechnet wurde;
Aggregieren der Schiffsreisedaten für jedes der Schiffsmanövriermuster; und
Erzeugen der Leistungsschätzungsmodelle für jedes der Schiffsmanövriermuster aus den für jedes der Schiffsmanövriermuster aggregierten Schiffsreisedaten unter Verwendung von meteorologischen und hydrographischen Ist-Daten als eine erklärende Variable und Schiffsleistung als eine Zielvariable.

## Revendications

**1.** Procédé d'aide à la navigation exécuté par un ordinateur, le procédé d'aide à la navigation comprenant :

le stockage de modèles d'estimation de performances relatifs à la vitesse d'un navire pour des schémas de manoeuvre de navire, les schémas de manoeuvre de navire indiquant différentes puissances de moteur ;
la réception, depuis un côté utilisation, d'informations de navigation incluant un des schémas de manoeuvre de navire à utiliser dans une action d'aide à la navigation du côté utilisation ;
le calcul de la vitesse du navire sur un itinéraire du navire, sur la base d'un des modèles d'estimation de performances qui correspond audit un des schémas de manoeuvre de navire reçu parmi les modèles d'estimation de performances, et de données de prévision météorologiques et hydrographiques ;
l'affichage d'une heure d'arrivée sur un itinéraire qui est optimal, sur la base de la vitesse du navire qui a été calculée ;
**caractérisé par** :

la classification de données de voyage de navire selon des conditions météorologiques et hydrographiques ;
le calcul d'une distribution caractéristique d'une manoeuvre de navire pour chaque condition météorologique et hydrographique, en utilisant les données de voyage de navire qui ont été classifiées ;
l'extraction d'une pluralité de schémas de manoeuvre de navire à partir de la distribution caractéristique de la manoeuvre de navire qui a été calculée pour chaque condition météorologique et hydrographique ;
l'agrégation des données de voyage de navire pour chacun des schémas de manoeuvre de navire ; et
la génération des modèles d'estimation de performances pour chacun des schémas de manoeuvre de navire à partir des données de voyage de navire agrégées pour chacun des schémas de manoeuvre de navire, en utilisant des données météorologiques et hydrographiques réelles comme variable explicative et les performances du navire comme variable objective.

**2.** Procédé d'aide à la navigation selon la revendication 1, dans lequel

pour une partie partielle de l'itinéraire qui est optimal, le calcul calcule la vitesse du navire dans la partie partielle, sur la base d'un des modèles d'estimation de performances d'un autre des schémas de manoeuvre de navire parmi les modèles d'estimation de performances, et
l'affichage modifie l'itinéraire qui est optimal pour une partie entière, sur la base de la vitesse du navire dans la partie partielle qui a été calculée, et à afficher l'heure d'arrivée sur l'itinéraire qui est optimal et modifié.

**3.** Procédé d'aide à la navigation selon la revendication 1, comprenant en outre :

le calcul d'une direction dans laquelle le navire est censé se déplacer par rapport à une position actuelle du navire, à partir de l'itinéraire qui est optimal ;
le calcul d'un angle de barre en utilisant une direction dans laquelle le navire est actuellement en train d'être manoeuvré et la direction dans laquelle le navire est censé se déplacer ; et
la commande de la barre du navire sur la base de l'angle de barre qui a été calculé.

**4.** Dispositif d'aide à la navigation (1) comprenant :

une unité de stockage (20) configurée pour stocker des modèles d'estimation de performances relatifs à la vitesse d'un navire pour des schémas de manoeuvre de navire, les schémas de manoeuvre de navire indiquant différentes puissances de moteur ;
une unité de calcul configurée pour recevoir, depuis un côté utilisation, des informations de navigation incluant un des schémas de manoeuvre de navire à utiliser dans une action d'aide à la navigation du côté utilisation et calculer la vitesse du navire sur un itinéraire du navire, sur la base d'un des modèles d'estimation de performances qui correspond audit un des schémas de manoeuvre de navire reçu parmi les modèles d'estimation de performances, et de données de prévision météorologiques et hydrographiques ; et
une unité d'affichage configurée pour afficher une heure d'arrivée sur un itinéraire qui est optimal, sur la base de la vitesse du navire qui a été calculée ;
**caractérisé en ce que** l'unité de calcul est en outre configurée pour :
classifier des données de voyage de navire selon des conditions météorologiques et hydrographiques ; calculer une distribution caractéristique d'une manoeuvre de navire pour chaque condition météorologique et hydrographique, en utilisant les données de voyage de navire qui ont été classifiées ; extraire une pluralité de schémas de manoeuvre de navire à partir de la distribution caractéristique de la manoeuvre de navire qui a été calculée pour chaque condition météorologique et hydrographique ; agréger les données de voyage de navire pour chacun des schémas de manoeuvre de navire ; et générer les modèles d'estimation de performances pour chacun des schémas de manoeuvre de navire à partir des données de voyage de navire agrégées pour chacun des schémas de manoeuvre de navire, en utilisant des données météorologiques et hydrographiques réelles comme variable explicative et les performances du navire comme variable objective.

**5.** Programme d'aide à la navigation amenant un ordinateur à exécuter un traitement, le traitement comprenant :

le stockage de modèles d'estimation de performances relatifs à la vitesse d'un navire pour des schémas de manoeuvre de navire, les schémas de manoeuvre de navire indiquant différentes puissances de moteur ;
la réception, depuis un côté utilisation, d'informations de navigation incluant un des schémas de manoeuvre de navire à utiliser dans une action d'aide à la navigation du côté utilisation ;
le calcul de la vitesse du navire sur un itinéraire du navire, sur la base d'un des modèles d'estimation de performances qui correspond audit un des schémas de manoeuvre de navire reçu parmi les modèles d'estimation de performances, et de données de prévision météorologiques et hydrographiques ; et l'affichage d'une heure d'arrivée sur un itinéraire qui est optimal, sur la base de la vitesse du navire qui a été calculée ;
**caractérisé en ce que** le traitement comprend en outre :

la classification de données de voyage de navire selon des conditions météorologiques et hydrographiques ;
le calcul d'une distribution caractéristique d'une manoeuvre de navire pour chaque condition météorologique et hydrographique, en utilisant les données de voyage de navire qui ont été classifiées ;
l'extraction d'une pluralité de schémas de manoeuvre de navire à partir de la distribution caractéristique de la manoeuvre de navire qui a été calculée pour chaque condition météorologique et hydrographique ;
l'agrégation des données de voyage de navire pour chacun des schémas de manoeuvre de navire ; et
la génération des modèles d'estimation de performances pour chacun des schémas de manoeuvre de navire à partir des données de voyage de navire agrégées pour chacun des schémas de manoeuvre de navire, en utilisant des données météorologiques et hydrographiques réelles comme variable explicative et les performances du navire comme variable objective.

# FIG. 1

1

NAVIGATION SUPPORT DEVICE

10

CONTROL UNIT

20

STORAGE UNIT

### MODEL LEARNING PHASE

11

DATA COLLECTION UNIT

12

VOYAGE DATA CLASSIFICATION UNIT

13

PATTERN EXTRACTION UNIT

14

VOYAGE DATA AGGREGATION UNIT

15

PERFORMANCE ESTIMATION MODEL GENERATION UNIT

### SERVICE PROVISION PHASE

16

PERFORMANCE ESTIMATION UNIT

17

OPTIMAL ROUTE SEARCH UNIT

21

VOYAGE DATA

22

METEOROLOGICAL/ HYDROGRAPHIC DATA (ACTUAL/FORECAST)

23

VOYAGE DATA (FOR EACH METEOROLOGICAL AND HYDROGRAPHIC CONDITION)

24

PATTERN

25

VOYAGE DATA (FOR EACH PATTERN)

26

PERFORMANCE ESTIMATION MODEL

# FIG. 2

VOYAGE DATA FOR EACH PATTERN 21'

PERFORMANCE ESTIMATION MODEL FOR EACH PATTERN 26

OPTIMAL ROUTE FOR EACH PATTERN

PATTERN a (NORMAL OUTPUT)

<2>

<3>

<4>

DISTRIBUTION OF VESSEL SPEED

PATTERN b (slow x1)

PATTERN c (slow x2)

Speed

21

<1>

VOYAGE DATA

Frequency

0    30knot

METEOROLOGICAL/ HYDROGRAPHIC DATA (ACTUAL)    22

METEOROLOGICAL/ HYDROGRAPHIC DATA (FORECAST)    22

PATTERN b    PATTERN a

Optimal (slow x1)

Optimal (normal)

Optimal (slow x2)

⊖ 3000km    ◎ 7 Day 12 hours    ◉ 495.5L

PATTERN c

# FIG. 3

| ... | imo | vessel_na | ... | eta | draught | ... | LONGITUDE | LATITUDE | sog (SPEED) | cog (TRAVELING DIRECTION) | ... |
|---|---|---|---|---|---|---|---|---|---|---|---|
| | 1234567 | maru | | 8/10/2018 10:00 | 13.8 | | 102.8126 | -19.5776 | 11.1 | 133 | |
| | 1234567 | maru | | 8/10/2018 10:00 | 13.8 | | 102.8809 | -19.6438 | 11 | 135.1 | |
| | 1234567 | maru | | 8/10/2018 10:00 | 13.8 | | 102.8809 | -19.6438 | 11 | 135.1 | |

21

| heading (BOW DIRECTION) | ... | dt_pos_utc (TIME) | ... |
|---|---|---|---|
| 135 | | 7/31/2018 2:12 | |
| 137 | | 7/31/2018 2:17 | |
| 137 | | 7/31/2018 2:22 | |

# FIG. 4

WIND DATA 22

| FORECAST DELIVERY DATE AND TIME | TARGET DATE AND TIME | LATITUDE | LONGITUDE | WIND SPEED | WIND DIRECTION |
|---|---|---|---|---|---|
| 02/01/2018 00:00 | 02/02/2018 00:00 | 40.5 | 135.5 | 5.46 | 10 |
| 02/01/2018 00:00 | 02/02/2018 00:00 | 40.5 | 140.0 | 5.98 | 20 |
| 02/01/2018 00:00 | 02/02/2018 00:00 | 40.5 | 140.5 | 6.96 | 15 |

WAVE DATA

| FORECAST DELIVERY DATE AND TIME | TARGET DATE AND TIME | LATITUDE | LONGITUDE | WAVE HEIGHT | WAVE DIRECTION | WAVE PERIOD |
|---|---|---|---|---|---|---|
| 02/01/2018 00:00 | 02/03/2018 06:00 | 40.5 | 135.5 | 4.88 | 300 | 12.2 |
| 02/01/2018 00:00 | 02/03/2018 06:00 | 40.5 | 140.0 | 4.29 | 290 | 12.2 |
| 02/01/2018 00:00 | 02/03/2018 06:00 | 40.5 | 140.5 | 3.89 | 290 | 11.2 |

OCEAN CURRENT DATA

| FORECAST DELIVERY DATE AND TIME | TARGET DATE AND TIME | LATITUDE | LONGITUDE | OCEAN CURRENT SPEED | OCEAN CURRENT DIRECTION | LAYER |
|---|---|---|---|---|---|---|
| 02/01/2018 00:00 | 02/04/2018 12:00 | 40.5 | 135.5 | 0.080 | 120 | 1 |
| 02/01/2018 00:00 | 02/04/2018 12:00 | 40.5 | 140.0 | 0.087 | 130 | 1 |
| 02/01/2018 00:00 | 02/04/2018 12:00 | 40.5 | 140.5 | 0.093 | 125 | 1 |

EP 3 901 579 B1

# FIG. 5

21

VOYAGE DATA

METEOROLOGICAL AND
HYDROGRAPHIC
CONDITION

WIND FORCE 0

WIND FORCE 1、FORWARD

WIND FORCE 1、BACKWARD

...

WIND FORCE 10、
BACKWARD ON PORT SIDE

VOYAGE DATA FOR EACH
METEOROLOGICAL AND
HYDROGRAPHIC CONDITION 23

# FIG. 6

VOYAGE DATA FOR EACH
METEOROLOGICAL AND
HYDROGRAPHIC
CONDITION 23

FREQUENCY

0                    30knot

WIND FORCE 0

DATA OF SECTION WITH
HIGHEST FREQUENCY IS
REGARDED AS NORMAL
OUTPUT

VOYAGE DATA FOR
EACH PATTERN 25

VOYAGE DATA AT
NORMAL OUTPUT

PATTERN a
(NORMAL OUTPUT)

FREQUENCY

0                    30knot

WIND FORCE 0、
FORWARD
WIND FORCE 1、
FORWARD

VOYAGE DATA AT
MEDIUM OUTPUT

PATTERN b
(slow x1)

FREQUENCY

0                    30knot

DATA IS AGGREGATED
FOR EACH PEAK

VOYAGE DATA AT
SMALL OUTPUT

PATTERN c
(slow x2)

VOYAGE DATA AT
HIGH OUTPUT

PATTERN d
(high)

EP 3 901 579 B1

# FIG. 7

**BEFORE CORRECTION**

VOYAGE DATA
(DATA FOR EVERY
ONE MINUTE)

$d1$    $d2$

◎ PATTERN a
◎ PATTERN b
◎ PATTERN c

**CORRECTION**

VOYAGE DATA FOR
EACH PATTERN 25

PATTERN a
(NORMAL OUTPUT)

Speed    $d1'$

PATTERN b
(slow x1)

Speed

PATTERN c
(slow x2)

Speed

$d2'$

**AFTER CORRECTION**

VOYAGE DATA
(DATA FOR EVERY
ONE MINUTE)

$d1'$    $d2'$

FIG. 8

PERFORMANCE ESTIMATION
MODEL FOR EACH PATTERN 26

VOYAGE DATA FOR
EACH PATTERN 25

PATTERN a
(NORMAL OUTPUT)

PATTERN b
(slow x1)

PATTERN c
(slow x2)

Speed

Speed

Speed

LEARNING

METEOROLOGICAL/HY
DROGRAPHIC DATA
(ACTUAL)

22

PERFORMANCE
ESTIMATION
MODEL

PERFORMANCE
ESTIMATION
MODEL

PERFORMANCE
ESTIMATION
MODEL

PATTERN a
(NORMAL OUTPUT)

PATTERN b
(slow x1)

PATTERN c
(slow x2)

# FIG. 9

REGRESSION LINE

$$y = \beta_0 + \beta_1 x_1$$

# FIG. 10

NAVIGATION CONDITIONS
· DEPARTURE PLACE, ARRIVAL PLACE
· DEPARTURE TIME
· PATTERN
(ENTIRE ROUTE, SPECIFIED SECTION)

S100

ROUTE OPTIMIZATION

S130

OPTIMAL ROUTE FOR EACH PATTERN

PATTERN b    PATTERN a

Optimal (slow x1)

Optimal (normal)

Optimal (slow x2)

3000km    7Day 12hours    495.5L

ARRIVAL TIME
xx/xx/xx xx:xx
yy/yy/yy yy:yy
zz/zz/zz zz:zz

PATTERN c

PATTERN
METEOROLOGICAL AND
HYDROGRAPHIC FORECAST DATA

S110

S120

VESSEL PERFORMANCE
· VESSEL SPEED
· FUEL CONSUMPTION

PERFORMANCE ESTIMATION MODEL
FOR EACH PATTERN

PATTERN a
(NORMAL OUTPUT)

PERFORMANCE ESTIMATION MODEL

PATTERN b
(slow x1)

PERFORMANCE ESTIMATION MODEL

PATTERN c
(slow x2)

PERFORMANCE ESTIMATION MODEL

PERFORMANCE ESTIMATION

EP 3 901 579 B1

# FIG. 11

■OPTIMAL ROUTE SEARCH RESULT (SUMMARY DATA)

| ROUTE ID | ROUTE NAME | VESSEL ID | VESSEL NAME | DEPARTURE DATE AND TIME | PREDICTED ARRIVAL DATE AND TIME | NAVIGATION DISTANCE | AVERAGE VESSEL SPEED OVER GROUND | AVERAGE VESSEL SPEED OVER WATER | CONSUMED FUEL | ... |
|---|---|---|---|---|---|---|---|---|---|---|
| 1 | JAPAN-LOS ANGELES | 100 | FUJITSU MARU | 02/01/2018 00:00 | 02/13/2018 12:00 | 4623.2 | 14.3 | 14.0 | 756.4 | |
| 2 | LOS ANGELES-JAPAN | 100 | FUJITSU MARU | 02/14/2018 00:00 | 02/28/2018 00:00 | 4701.0 | 14.3 | 14.6 | 764.5 | |
| 3 | JAPAN-SINGAPORE | 101 | KENKYUJO MARU | 02/01/2018 00:00 | 02/13/2018 12:00 | 3987.6 | 13.3 | 13.4 | 645.6 | |

■OPTIMAL ROUTE SEARCH RESULT (DETAILED DATA)

| ROUTE ID | DETAIL ID | DATE AND TIME | LATITUDE | LONGITUDE | VESSEL SPEED OVER GROUND | VESSEL SPEED OVER WATER | WIND SPEED | WIND DIRECTION | WAVE HEIGHT | WAVE DIRECTION | OCEAN CURRENT SPEED | OCEAN CURRENT DIRECTION | CONSUMED FUEL | ... |
|---|---|---|---|---|---|---|---|---|---|---|---|---|---|---|
| 1 | 1 | 02/01/2018 00:00 | 34.772 | 139.689 | 14.6 | 14.5 | 5.46 | 10 | 4.88 | 20 | 0.080 | 30 | 0.00 | |
| 1 | 2 | 02/01/2018 01:00 | 34.892 | 139.928 | 14.5 | 14.6 | 5.98 | 20 | 4.29 | 25 | 0.087 | 40 | 2.52 | |
| 1 | 3 | 02/01/2018 02:00 | 35.012 | 140.169 | 14.7 | 14.6 | 6.96 | 15 | 3.89 | 10 | 0.093 | 20 | 5.05 | |

EP 3 901 579 B1

# FIG. 12

ARRIVAL POINT

c1

CHANGE

ARRIVAL POINT

c1'

Change?

◯ normal (ave. speed 25 knots)

◯ slow x1 (ave. speed 20 knots)

c2 ⬤ slow x2 (ave. speed 15 knots)

G0

EP 3 901 579 B1

# FIG. 13

PATTERN a
(NORMAL OUTPUT)

PERFORMANCE
ESTIMATION
MODEL

t2
14:00

10:00
c2

p1
p0
6:00

p2

t3
18:00
p3

Change?
○ normal (ave. speed 25 knots)
○ slow x1 (ave. speed 20 knots)
◉ slow x2 (ave. speed 15 knots)

PATTERN b
(slow x2)

PERFORMANCE
ESTIMATION
MODEL

t2'
15:00

10:00
c2'

p1
p0
6:00

p2

PATTERN a
(NORMAL OUTPUT)

PERFORMANCE
ESTIMATION
MODEL

t2'
15:00

10:00
c2'

p1
p0
6:00

p2
c3

p3
19:20
t3'

# FIG. 14

```
          ┌──────────────┐
          │    START     │
          └──────┬───────┘
                 │
                 ▼
   ┌─────────────────────────────┐
   │     CLASSIFY VOYAGE DATA     │──── S11
   └──────────────┬──────────────┘
                  │
                  ▼
   ┌─────────────────────────────┐
   │ ANALYZE PATTERN OF VESSEL    │──── S12
   │         MANEUVERING          │
   └──────────────┬──────────────┘
                  │
                  ▼
   ┌─────────────────────────────┐
   │ OBTAIN VOYAGE DATA BY        │
   │ PATTERNS OF VESSEL           │──── S13
   │ MANEUVERING BY AGGREGATION   │
   └──────────────┬──────────────┘
                  │
                  ▼
   ┌─────────────────────────────┐
   │ CORRECT VOYAGE DATA          │
   │ AGGREGATED BY PATTERNS       │──── S14
   │ OF VESSEL MANEUVERING        │
   └──────────────┬──────────────┘
                  │
                  ▼
   ┌─────────────────────────────┐
   │ GENERATE PERFORMANCE         │──── S15
   │ ESTIMATION MODEL             │
   └──────────────┬──────────────┘
                  │
                  ▼
          ┌──────────────┐
          │     END      │
          └──────────────┘
```

# FIG. 15

```
                    ┌──────────┐
                    │  START   │
                    └────┬─────┘
                         │
                         ▼
        ╱─────────────────────────────╲  ⌐S21
       ╱      HAS NAVIGATION            ╲        NO
      ◄ INFORMATION SUCH AS PATTERN BEEN ►──────────┐
       ╲        ACCEPTED?               ╱            │
        ╲─────────────────────────────╱             │
                    │ YES                            │
         ┌──────────▼──────────────────┐  ⌐S22      │
         │ ACQUIRE PERFORMANCE ESTIMATION MODEL      │
    ┌───►│   CORRESPONDING TO PATTERN  │             │
    │    └──────────┬──────────────────┘             │
    │               │                                │
    │    ┌──────────▼──────────────────┐  ⌐S23      │
    │    │ ESTIMATE VESSEL PERFORMANCE USING         │
    │    │  PERFORMANCE ESTIMATION MODEL │           │
    │    └──────────┬──────────────────┘             │
    │               │                                │
    │    ┌──────────▼──────────────────┐  ⌐S24      │
    │    │    SEARCH FOR OPTIMAL ROUTE  │            │
    │    └──────────┬──────────────────┘             │
    │               │                                │
    │    ┌──────────▼──────────────────┐  ⌐S25      │
    │    │     DISPLAY OPTIMAL ROUTE    │            │
    │    └──────────┬──────────────────┘             │
    │               │                                │
    │      ╱────────▼────────────╲  ⌐S26            │
    │     ╱    HAS CHANGE IN       ╲      NO         │
    │    ◄ PATTERN FOR PARTIAL SECTION BEEN ►────────┤
    │     ╲      ACCEPTED?         ╱                 │
    │      ╲───────┬─────────────╱                  │
    │              │ YES                             │
    └──────────────┘                                │
                                                    │
                    ┌──────────┐                    │
                    │   END    │◄───────────────────┘
                    └──────────┘
```

# FIG. 16

START

S31 HAS AUTOPILOT COOPERATION INSTRUCTION BEEN ACCEPTED? — NO

YES

S32 ACQUIRE OPTIMAL ROUTE SEARCH RESULT

GPS

S33 CALCULATE DIRECTION

DIRECTION SENSOR

S34 AUTOPILOT

S35 OPERATE RUDDER

VESSEL (RUDDER)

END

FIG. 17

# FIG. 18

**EP 3 901 579 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018273144 A1
- EP 2498056 A1
- JP 5281022 B
- JP 2013134089 A